# EUROPEAN PATENT SPECIFICATION

(11) **EP 3 822 319 B1**
(45) Date of publication and mention of the grant of the patent: **18.11.2026**
(21) Application number: 19743652.0
(22) Date of filing: 25.04.2019
(51) Int. Cl.: B29C 45/00, B29C 45/37, C08G 63/183, C08G 63/199, C08L 67/02, C08K 3/40, C08L 69/00

(54) **THERMOPLASTIC RESIN COMPOSITION, AND METHOD FOR MANUFACTURING MOLDED ARTICLE**
THERMOPLASTISCHE HARZZUSAMMENSETZUNG UND VERFAHREN ZUR HERSTELLUNG EINES FORMKÖRPERS
COMPOSITION DE RÉSINE THERMOPLASTIQUE ET PROCÉDÉ DE FABRICATION D'ARTICLE MOULÉ

(30) Priority: 11.07.2018 JP 2018131658; 23.01.2019 JP 2019009474
(43) Date of publication of application: 19.05.2021
(73) Proprietor: Mitsubishi Engineering-Plastics Corporation, Tokyo 105-0021 (JP)
(72) Inventor: HINO, Kosei, Hiratsuka-shi Kanagawa 254-0016 (JP)
(74) Representative: Hoffmann Eitle
(86) International application number: PCT/JP2019/017699
(87) International publication number: WO 2019/146807

(56) References cited:
- EP-A1- 3 017 834
- WO-A1-2012/176533
- WO-A1-2017/057903
- WO-A1-2017/149395
- CN-A- 103 865 246
- JP-A- 2016 216 556
- JP-A- H05 255 583
- JP-A- H06 212 070
- JP-A- H07 207 139
- US-A- 5 942 585

## Description

### Technical Field

The present invention relates to a thermoplastic resin composition and a method for producing a molded article. Specifically, the present invention relates to a glass-reinforced thermoplastic resin composition including a glass filler, such as glass fibers, charged therein, the thermoplastic resin composition being improved in terms of transparency, and to a method for producing a molded article having further high transparency with the thermoplastic resin composition.

### Background Art

Polycarbonate resins have been broadly used as resins excellent in terms of heat resistance, impact resistance, transparency, etc. in various fields. In particular, glass-reinforced polycarbonate resin compositions that include a glass filler, such as glass fibers, charged therein have been broadly used in industrial fields such as camera, office automation equipment, communication equipment, precision equipment, electrical and electronic components, automotive components, and general machine components, since they have excellent properties such as dimensional stability, stiffness (bending strength), and heat resistance.

The transparency of glass-reinforced polycarbonate resin compositions is considerably low due to the difference in refractive index between glass and polycarbonate resins.

PTL 1 proposes a polycarbonate resin composition improved in terms of transparency as a result of the difference in refractive index between polycarbonate resins and glass fibers being reduced by using a polycarbonate resin including an aliphatic carbonate repeating unit derived from an aliphatic dihydroxy compound in combination with glass fibers having a specific glass composition. The production of the polycarbonate resin composition described in PTL 1 requires the use of a specific type of polycarbonate resin and a specific type of glass fibers. That is, the types of raw materials for the polycarbonate resin composition described in PTL 1 are limited.

PTL 2 describes a thermoplastic resin composition excellent in terms of transparency, impact strength, and surface hardness, the thermoplastic resin composition including a polycarbonate resin, a poly(1,4-cyclohexylenedimethylene terephthalate) copolyester resin, and a phosphorus antioxidant at predetermined proportions. PTL 2 describes only that the addition of the poly(1,4-cyclohexylenedimethylene terephthalate) copolyester resin enhances surface hardness, while no mention is made of the addition of glass fibers; it is not suggested that the addition of the poly(1,4-cyclohexylenedimethylene terephthalate) copolyester resin limits the degradation of the transparency of the polycarbonate resin which may be caused as a result of the addition of glass fibers.

Although a heat-insulation mold and heat-and-cool molding, which are used in the method for producing a molded article according to the present invention, have been known in the related art (e.g., see PTLs 3 and 4 as for a heat-insulation mold, and see PTL 5 as for a heat-and-cool molding method), it is not known that the use of the above mold or method may enhance the transparency of a molded article produced by molding a glass-reinforced thermoplastic resin.

PTL 6 describes a glass fiber reinforced resin composition that comprises the following components by weight: 40 to 90 parts of thermoplastic resin, 10 to 60 parts of a reinforcement filling material, and 0.01 to 20 parts of a flame retardant by taking the sum of the thermoplastic resin and the reinforcement filling material as 100 parts. The thermoplastic resin comprises PC (polycarbonate) resin and PCT resin with the weight ratio of PC (polycarbonate) resin to PCT resin being 1/99 to 99/1, the reinforcement filling material comprises a flat section glass fiber with the section flat rate of 0.1-0.5 and the balance of a fibrous filling material, and the weight ratio of flat section glass fiber to fibrous filling material is 1/99 to 99/1.

PTL 7 describes a glass fiber-reinforced polycarbonate resin composition that comprises: about 100 parts by weight of a base resin containing polycarbonate, an amorphous polyester resin, and a glass fiber; and about 0.1 to about 1.5 parts by weight of a reactive silane compound.

PTL 8 describes polyester compositions comprising at least one polyester which comprises terephthalic acid residues, 2,2,4,4-tetramethyl-1,3-cyclobutanediol, and 1,4-cyclohexanedimethanol, wherein the inherent viscosity and the Tg of the polyester provides for certain polyester properties.

PTL 1: Japanese Patent No. 6131264
PTL 2: Japanese Unexamined Patent Application Publication No. 2016-216556
PTL 3: Japanese Unexamined Patent Application Publication No. 2001-300941
PTL 4: Japanese Unexamined Patent Application Publication No. 2014-46590
PTL 5: Japanese Unexamined Patent Application Publication No. 60-54828
PTL 6: CN 10 3865246 A
PTL 7: WO 2017/057903 A1
PTL 8: EP 3 017 834 A1

### Summary of Invention

An object of the present invention is to provide a glass-reinforced thermoplastic resin composition that includes a polycarbonate resin and a glass filler, such as glass fibers, charged in the polycarbonate resin, the thermoplastic resin composition being improved in terms of transparency, a molded article produced by molding the thermoplastic resin composition, and a method for producing a molded article having further high transparency with the thermoplastic resin composition.

The inventor of the present invention found that adding a specific polyester resin to a polycarbonate resin having a specific viscosity-average molecular weight at a predetermined ratio may make the refractive index of the resin matrix approach that of glass fibers and thereby improve the transparency of a molded article produced by molding a glass-reinforced thermoplastic resin.

The inventor of the present invention also found that the transparency of the molded article may be further improved by performing injection molding of the above glass-reinforced thermoplastic resin composition, which includes a polycarbonate resin and a polyester resin in combination, in accordance with a specific method.

### Advantageous Effects of Invention

According to the present invention, the transparency of a glass-reinforced thermoplastic resin composition produced by charging a glass filler, such as glass fibers, to a polycarbonate resin in order to enhance dimensional stability, stiffness (bending strength), heat resistance, etc., which has been a drawback of a glass-reinforced thermoplastic resin composition, may be markedly improved, and a glass-reinforced thermoplastic resin composition having excellent transparency and a molded article produced by molding the glass-reinforced thermoplastic resin composition may be provided.

By using the thermoplastic resin composition according to the present invention and a molded article produced by molding the thermoplastic resin composition, the application range of a glass-reinforced thermoplastic resin composition may be markedly expanded to cover applications in which transparency is required, such as alternative materials to glass, such as windows for automobiles, buildings, or the like.

### Description of Embodiments

Details of an embodiment of the present invention are described below.

### {Thermoplastic Resin Composition}

A thermoplastic resin composition according to the present invention includes a thermoplastic resin component and a glass filler (C). The thermoplastic resin component includes a polycarbonate resin (A) having a viscosity-average molecular weight of 13,000 to 22,000 and a polyester resin (B) including a terephthalic acid residue, a 1,4-cyclohexanedimethanol residue, and a 2,2,4,4-tetramethyl-1,3-cyclobutanediol residue. The amounts of the polycarbonate resin (A) and the polyester resin (B) are 26 to 60 parts by mass and 74 to 40 parts by mass, respectively, relative to 100 parts by mass of the total amount of the polycarbonate resin (A) and the polyester resin (B). The amount of the glass filler (C) is 10 to 45 parts by mass relative to 100 parts by mass of the thermoplastic resin component, and wherein the viscosity-average molecular weight is determined by conversion of solution viscosity measured at 25°C using methylene chloride as a solvent.

### [Mechanisms]

The thermoplastic resin composition according to the present invention includes a polyester resin (B) including a terephthalic acid residue, a 1,4-cyclohexanedimethanol residue, and a 2,2,4,4-tetramethyl-1,3-cyclobutanediol residue, the polyester resin (B) being mixed with a polycarbonate resin (A) at a predetermined ratio. This enables the refractive index of the resin matrix to approach the refractive index of glass and thereby limits the transparency degradation caused due to the difference in refractive index between the resin matrix and the glass filler (C).

Since the polycarbonate resin (A) has a higher refractive index than glass, the transparency of a glass-reinforced polycarbonate resin composition that includes the polycarbonate resin (A) filled with the glass filler (C) may become significantly degraded due to the difference in refractive index. Adding the polyester resin (B) having a low refractive index to the polycarbonate resin (A) at a predetermined ratio enables the refractive index of a resin matrix constituted by the polycarbonate resin (A) and the polyester resin (B) to approach the refractive index of the glass filler (C) and thereby may markedly improve transparency.

### [Polycarbonate Resin (A)]

The polycarbonate resin (A) used in the present invention is preferably an aromatic polycarbonate resin from the viewpoints of transparency, impact resistance, heat resistance, and the like.

The aromatic polycarbonate resin is a thermoplastic polymer or copolymer that may be branched and is produced by the reaction of an aromatic dihydroxy compound or an aromatic dihydroxy compound and a small amount of polyhydroxy compound with phosgene or a carbonate diester. The method for producing the aromatic polycarbonate resin is not limited; it is possible to use an aromatic polycarbonate resin produced by a phosgene method (interfacial polymerization) or a fusion method (ester interchange method), which are known in the related art. In the case where a fusion method is used, it is possible to use an aromatic polycarbonate resin in which the amount of OH groups included in the terminal groups has been adjusted.

Examples of the aromatic dihydroxy compound used as a raw material include 2,2-bis(4-hydroxyphenyl)propane (i.e., bisphenol A), tetramethyl bisphenol A, bis(4-hydroxyphenyl)-p-diisopropylbenzene, hydroquinone, resorcinol, and 4,4-dihydroxydiphenyl. The aromatic dihydroxy compound is preferably bisphenol A. Alternatively, a compound formed as a result of one or more tetraalkylphosphonium sulfonate portions bonding to the above aromatic dihydroxy compound may also be used.

The branched aromatic polycarbonate resin may be produced by replacing a part of the aromatic dihydroxy compound with any of the following branching agents, that is, polyhydroxy compounds such as phloroglucine, 4,6-dimethyl-2,4,6-tri(4-hydroxyphenyl)heptene-2,4,6-dimethyl-2,4,6-tri(4-hydroxyphenyl)heptane, 2,6-dimethyl-2,4,6-tri(4-hydroxyphenylheptene-3, 1,3,5-tri(4-hydroxyphenyl)benzene, and 1,1,1-tri(4-hydroxyphenyl)ethane; and compounds such as 3,3-bis(4-hydroxyaryl)oxindole (i.e., isatin bisphenol), 5-chloroisatin, 5,7-dichloroisatin, and 5-bromoisatin. The amount of the compound used for the above substitution is commonly 0.01 to 10 mol% and is preferably 0.1 to 2 mol% of the amount of the aromatic dihydroxy compound.

Among the above aromatic polycarbonate resins, a polycarbonate resin derived from 2,2-bis(4-hydroxyphenyl)propane and a polycarbonate copolymer derived from 2,2-bis(4-hydroxyphenyl)propane and another aromatic dihydroxy compound are preferable. The aromatic polycarbonate resin may be a copolymer composed primarily of a polycarbonate resin, such as a copolymer of a polymer or oligomer having a siloxane structure.

The above aromatic polycarbonate resins may be used alone or in a mixture of two or more.

For adjusting the molecular weight of the aromatic polycarbonate resin, an aromatic monohydroxy compound may be used. Examples of the aromatic monohydroxy compound include m-methylphenol, p-methylphenol, m-propylphenol, p-propylphenol, p-tert-butylphenol, and p-long chain alkylsubstituted phenol.

As for the molecular weight of the polycarbonate resin (A), the viscosity-average molecular weight of the polycarbonate resin (A) which is determined by conversion of solution viscosity measured at 25°C using methylene chloride as a solvent is 13,000 to 22,000 and is preferably 13,000 to 20,000. If the viscosity-average molecular weight of the polycarbonate resin (A) is less than the above lower limit, it becomes not possible to consistently draw strands in the production of the thermoplastic resin composition and it becomes difficult to make pellets. If the viscosity-average molecular weight of the polycarbonate resin (A) is more than the above upper limit, the compatibility of the polycarbonate resin (A) with the polyester resin (B) may become degraded and, consequently, a molded article having excellent transparency may fail to be produced.

As a polycarbonate resin (A), two or more types of polycarbonate resins having different viscosity-average molecular weights may be used in a mixture. In such a case, a polycarbonate resin having a viscosity-average molecular weight that does not fall within the above range may be used. Such a polycarbonate resin is used such that the viscosity-average molecular weight of the resulting resin mixture falls within the above range.

### [Polyester Resin (B)]

The polyester resin (B) used in the present invention is an amorphous polyester resin (B) that includes a terephthalic acid residue, a 1,4-cyclohexanedimethanol (hereinafter, may be referred to as "CHDM") residue, and a 2,2,4,4-tetramethyl-1,3-cyclobutanediol (hereinafter, may be referred to as "TMCD") residue.

The term "residue" used herein refers to a structural portion that is derived from a compound used as a raw material for producing the polyester resin and is to be incorporated in the polyester resin.

A polyester resin is produced by esterification of a dicarboxylic acid component (dicarboxylic acid or a derivative thereof) with a diol or by transesterification. The polyester resin (B) used in the present invention is produced using at least a terephthalic acid component (terephthalic acid or a derivative thereof) as a dicarboxylic acid component and at least CHDM and TMCD as diols.

CHDM may be cis, trans, or a mixture thereof. TMCD may be cis, trans, or a mixture thereof.

In the polyester resin (B), the total proportion of the CHDM and TMCD residues to the all diol residues included in the polyester resin (B) is preferably 85 mol% or more, is particularly preferably 90 to 100 mol%, and is especially preferably 95 to 100 mol% from the viewpoints of transparency and heat resistance.

In the polyester resin (B), the proportions of the CHDM and TMCD residues relative to 100 mol% of the total proportion of the CHDM and TMCD residues are preferably 10 to 90 mol% and 90 to 10 mol%, respectively, are more preferably 20 to 85 mol% and 15 to 80 mol%, respectively, and are particularly preferably 30 to 80 mol% and 20 to 70 mol%, respectively. It is not preferable that the proportion of the CHDM or TMCD residue to the all diol residues approach 100 mol% because, in such a case, the polyester resin (B) becomes crystalline and transparency may become degraded. It is preferable that the polyester resin (B) include the CHDM and TMCD residues at the above proportions because, in such a case, transparency and heat resistance may be enhanced.

In the case where the polyester resin (B) includes a diol residue other than the CHDM or TMCD residue as a diol residue, the diol constituting the other diol residue is, for example, one or more diols selected from diols having 2 to 16 carbon atoms, such as ethylene glycol, diethylene glycol, 1,2-propanediol, 1,3-propanediol, neopentyl glycol, 1,4-butanediol, 1,5-pentanediol, 1,6-hexanediol, and p-xylene glycol.

In the polyester resin (B), the proportion of the terephthalic acid residue to the all dicarboxylic acid residues included in the polyester resin (B) is preferably 50 mol% or more, is particularly preferably 80 mol% or more, and is especially preferably 90 to 100 mol% from the viewpoint of availability.

In the case where the polyester resin (B) includes a dicarboxylic acid residue other than the terephthalic acid residue, the dicarboxylic acid constituting the other dicarboxylic acid residue is, for example, one or more dicarboxylic acids selected from aromatic dicarboxylic acids, such as isophthalic acid, 4,4'-biphenyldicarboxylic acid, 1,4-naphthalenedicarboxylic acid, 1,5-naphthalenedicarboxylic acid, 2,6-naphthalenedicarboxylic acid, 2,7-naphthalenedicarboxylic acid, and 4,4'-stilbenedicarboxylic acid; and aliphatic dicarboxylic acids, such as malonic acid, succinic acid, glutaric acid, adipic acid, pimelic acid, suberic acid, and azelaic acid.

Only one type of the polyester resin (B) may be used alone. Alternatively, two or more types of polyester resins (B) including CHDM and TMCD residues having different compositions, different physical properties, etc. may be used in a mixture.

### [Proportions of Polycarbonate Resin (A) and Polyester Resin (B)]

The thermoplastic resin composition according to the present invention includes the polycarbonate resin (A) and the polyester resin (B) such that the amounts of the polycarbonate resin (A) and the polyester resin (B) are 26 to 60 parts by mass and 74 to 40 parts by mass, respectively, relative to 100 parts by mass of the total amount of the polycarbonate resin (A) and the polyester resin (B). Whether the amount of the polycarbonate resin (A) is larger than the above range and the amount of the polyester resin (B) is smaller than the above range or, conversely, the amount of the polyester resin (B) is larger than the above range and the amount of the polycarbonate resin (A) is smaller than the above range, it becomes not possible to make the refractive index of the resin matrix approach the refractive index of the glass filler (C) and a molded article having excellent transparency may fail to be produced.

It is preferable that the amounts of the polycarbonate resin (A) and the polyester resin (B) be 27 to 55 parts by mass and 45 to 73 parts by mass, respectively.

The mixing ratio between the polycarbonate resin (A) and the polyester resin (B) is preferably set such that the refractive index of the resin matrix approximates the refractive index of the glass filler (C). Thus, the mixing ratio between the polycarbonate resin (A) and the polyester resin (B) is preferably adjusted appropriately in accordance with the refractive index of the glass filler (C) that is to be used.

### [Other Resin Components]

The thermoplastic resin composition according to the present invention may include a thermoplastic resin other than the polycarbonate resin (A) or the polyester resin (B) as a thermoplastic resin component such that the advantageous effects of the present invention are not impaired.

Examples of the other thermoplastic resin that may be included in the thermoplastic resin composition according to the present invention include a polyolefin resin, such as a polyethylene resin or a polypropylene resin, a polyamide resin, a polyimide resin, a polyether imide resin, a polyurethane resin, a polyphenylene ether resin, a polyphenylene sulfide resin, a polysulfone resin, a polymethacrylate resin, a phenolic resin, an epoxy resin, a polycarbonate resin other than the polycarbonate resin (A), a polyester resin other than the polyester resin (B), and a thermoplastic elastomer.

The amount of the other thermoplastic resin included in the thermoplastic resin composition is preferably 10 parts by mass or less and is particularly preferably 5 parts by mass or less relative to 100 parts by mass of the entire thermoplastic resin component, that is, the total amount of the polycarbonate resin (A), the polyester resin (B), and the other thermoplastic resin in order to achieve the advantageous effect of using the polycarbonate resin (A) in combination with the polyester resin (B) in the present invention, that is, improvement in transparency, with effect.

### [Glass Filler (C)]

The form of the glass filler (C) used in the present invention is not limited; various form of glass fillers, such as glass fibers, a glass powder, glass flakes, milled fibers, and glass beads, may be used. The above types of glass fillers (C) may be used alone or in combination of two or more. From the viewpoints of transparency and a reinforcing effect, it is preferable to use glass fibers and/or glass flakes, it is more preferable to use glass fibers or glass flakes, and it is particularly preferable to use glass fibers.

The glass composition of the glass filler (C) is not limited. Alkali-free glass (E glass) is preferably used.

A cross section (cross section orthogonal to the longitudinal direction of the glass fiber) of a glass fiber used as a glass filler (C) preferably has a flattened shape because glass fibers having flattened cross sections (hereinafter, such glass fibers may be referred to as "flattened cross-section glass fibers") have better orientation during molding and enhance dimensional stability, etc. in a more effective manner than glass fibers having circular cross sections. In addition, flattened cross-section glass fibers may enhance the transparency of the molded article with effect.

The cross-sectional shape of a glass fiber is represented by a flattening factor expressed as a ratio of major axis length to minor axis length (D2/D1), where D2 and D1 are the lengths of major and minor axes, respectively, of a cross section of the fiber which is orthogonal to the longitudinal direction of the fiber. The average flattening factor of the glass fibers used in the present invention is preferably 1.5 to 8 and is more preferably 3 to 8.

The average of the major axis lengths D2 of cross sections of the flattened cross-section glass fibers used in the present invention is commonly 10 to 50 µm, is preferably 15 to 40 µm, is more preferably 20 to 35 µm, is further preferably 24 to 30 µm, and is particularly preferably 25 to 30 µm.

Examples of the cross-sectional shape of the flattened cross-section glass fibers include various noncircular shapes such as a flattened shape (substantially rectangular shape), an elliptical shape, a cocoon-like shape, a trefoil-like shape, and shapes analogous to these shapes. A flattened shape and an elliptical shape are preferable. A flattened shape is particularly preferable.

The ratio (aspect ratio) between the average fiber length and average fiber diameter of the glass fibers used in the present invention is normally 2 to 1000, is preferably 2.5 to 700, and is more preferably 3 to 600. When the aspect ratio of the glass fibers is 2 or more, mechanical strength may be markedly increased. When the aspect ratio is 600 or less, warpage and anisotropy may be reduced and, consequently, the degradation of the appearance of the molded article may be limited.

When the glass fibers have circular cross sections, the average fiber diameter (diameter) of the glass fibers corresponds to the diameter of the glass fibers. When the glass fibers have cross-sectional shapes other than a circular shape, the average fiber diameter (diameter) of the glass fibers corresponds to a number-average fiber diameter (diameter) calculated by considering the cross-sectional shapes of the glass fibers as perfect circles having the same area as the respective cross-sectional shapes. The average fiber length of the glass fibers corresponds to the number average of the lengths of the fibers in the major-axis direction. The average fiber length and average fiber diameter of the glass fibers may be determined as the averages of the fiber lengths and fiber diameters of about 100 glass fibers that are randomly selected by SEM (scanning electron microscope) observation. When the glass fibers are a commercial product, catalog values may be used.

The glass flakes are scale-like glass powder particles that commonly have an average particle size of 10 to 4000 µm, an average thickness of 0.1 to 10 µm, and an aspect ratio (ratio of average maximum diameter to average thickness) of about 2 to 1000. The average particle size of the glass flakes used in the present invention is preferably 2000 µm or less and is particularly preferably 100 to 1500 µm. The average thickness of the glass flakes is preferably 0.1 to 10 µm and is particularly preferably 0.4 to 6 µm. The aspect ratio of the glass flakes is preferably 10 to 800 and is particularly preferably 50 to 600.

The glass filler (C) may be a glass filler that has been surface-treated with a surface-treating agent, such as a silane coupling agent, in order to improve adhesion to the resin matrix and reduce the decomposition of the polycarbonate resin (A). Since most of commercial glass fibers and commercial glass flakes are surface-treated with a surface-treating agent, when a surface-treated product is used, it is not necessary to further use a surface-treating agent.

The thermoplastic resin composition according to the present invention includes the glass filler (C), such as glass fibers, such that the amount of the glass filler (C) is 10 to 45 parts by mass relative to 100 parts by mass of the thermoplastic resin component including the polycarbonate resin (A) and the polyester resin (B). If the amount of the glass filler (C) is less than 10 parts by mass, the advantageous effect of using the glass filler (C) to enhance stiffness, etc. may fail to be achieved at a sufficient level. If the amount of the glass filler (C) is more than 45 parts by mass, the glass filler (C) may rise to the surface due to the high proportion of the glass filler (C). This results in degradation of transparency, the appearance of the molded article, and impact resistance. Furthermore, it may become difficult to perform melt extrusion (formation of pellets) of the thermoplastic resin composition. The amount of the glass filler (C) used relative to 100 parts by mass of the thermoplastic resin component is preferably 12 to 43 parts by mass and is particularly preferably 15 to 40 parts by mass.

### [Other Additives]

The thermoplastic resin composition according to the present invention may further include various additives such that the advantageous effects of the present invention are not impaired. Examples of such additives include a stabilizer (D), such as a phosphorus heat stabilizer; a release agent (E); an ultraviolet absorber; an antistatic agent; a colorant (dye or pigment); an anti-fogging agent; a lubricant; an antiblocking agent; a flowability modifier; a slidability modifier; an impact resistance modifier; a plasticizer; a dispersing agent; an antibacterial agent; a flame retardant; and a drip inhibitor. The above additives may be used in combination of two or more. Specific examples of additives suitable for the thermoplastic resin composition according to the present invention are described below.

### <Stabilizer (D)>

Examples of the stabilizer (D) include a phosphorus heat stabilizer, a phenolic antioxidant, and an organic phosphate ester compound that are described below.

### (Phosphorus Heat Stabilizer)

The thermoplastic resin composition according to the present invention may include a phosphorus heat stabilizer. A phosphorus heat stabilizer is commonly effective for enhancing the stability of the resin component retained at high temperatures during melt kneading and the heat stability of the resin molded article in service.

Examples of the phosphorus heat stabilizer include phosphorus acid, phosphoric acid, phosphite esters, and phosphate esters (note that the organic phosphate ester compound described below is excluded). Among these, phosphite esters, such as a phosphite and a phosphonite, are preferable because they include trivalent phosphorus and readily reduce discoloration.

Examples of the phosphite include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenyl monodecyl phosphite, monophenyl didecyl phosphite, diphenyl mono(tridecyl) phosphite, tetraphenyl dipropyleneglycol diphosphite, tetraphenyl tetra(tridecyl)pentaerythritol tetraphosphite, a hydrogenated bisphenol A phenol phosphite polymer, diphenyl hydrogen phosphite, 4,4'-butylidene-bis(3-methyl-6-tert-butylphenyl di(tridecyl)phosphite), tetra(tridecyl)4,4'-isopropylidene diphenyl diphosphite, bis(tridecyl) pentaerythritol diphosphite, bis(nonylphenyl) pentaerythritol diphosphite, dilauryl pentaerythritol diphosphite, distearyl pentaerythritol diphosphite, tris(4-tert-butylphenyl) phosphite, tris(2,4-di-tert-butylphenyl) phosphite, a hydrogenated bisphenol A pentaerythritol phosphite polymer, bis(2,4-di-tert-butylphenyl) pentaerythritol diphosphite, bis(2,6-di-tert-butyl-4-methylphenyl) pentaerythritol diphosphite, 2,2'-methylenebis(4,6-di-tert-butylphenyl) octyl phosphite, and bis(2,4-dicumylphenyl) pentaerythritol diphosphite.

Examples of the phosphonite include tetrakis(2,4-di-iso-propylphenyl)-4,4'-biphenylene diphosphonite, tetrakis(2,4-di-n-butylphenyl)-4,4'-biphenylene diphosphonite, tetrakis(2,4-di-tert-butylphenyl)-4,4'-biphenylene diphosphonite, tetrakis(2,4-di-tert-butyl phenyl)-4,3'-biphenylene diphosphonite, tetrakis(2,4-di-tert-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, and tetrakis(2,6-di-tert-butylphenyl)-3,3'-biphenylene diphosphonite.

Among the above phosphite ester, distearyl pentaerythritol diphosphite, tris(2,4-di-tert-butylphenyl) phosphite, bis(2,6-di-tert-butyl-4-methylphenyl) pentaerythritol diphosphite, 2,2'-methylenebis(4,6-di-tert-butylphenyl) octyl phosphite, and bis(2,4-dicumylphenyl) pentaerythritol diphosphite are preferable. Tris(2,4-di-tert-butylphenyl) phosphite is particularly preferable because it has suitable heat resistance and is resistant to hydrolysis.

The above phosphorus heat stabilizers may be used alone or in combination of two or more.

In the case where the thermoplastic resin composition according to the present invention includes the phosphorus heat stabilizer, the amount of the phosphorus heat stabilizer used relative to 100 parts by mass of the thermoplastic resin component including the polycarbonate resin (A) and the polyester resin (B) is commonly 0.01 to 3 parts by mass, is particularly preferably 0.02 to 1 part by mass, and is especially preferably 0.03 to 0.5 parts by mass. When the amount of the phosphorus heat stabilizer used is equal to or more than the above lower limit, the advantageous effect of using the phosphorus heat stabilizer to enhance heat stability may be achieved at a sufficient level. The amount of the phosphorus heat stabilizer used is set to be equal to or less than the above upper limit because using an excessively large amount of the phosphorus heat stabilizer does not increase the advantageous effect beyond the maximum level and is not feasible in terms of cost effectiveness.

### (Phenolic Antioxidant)

The thermoplastic resin composition according to the present invention may include a phenolic antioxidant. The addition of a phenolic antioxidant may limit degradation of hue and degradation of mechanical properties which may occur during heat retention.

Examples of the phenolic antioxidant include a hindered phenolic antioxidant. Specific examples thereof include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenylpropionamide), 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazine-2-ylamino) phenol.

Among these, pentaerythritol tetrakis[3-(3,5-di-tert-butyl-4-hydroxyphenyl)propionate] and octadecyl-3-(3,5-di-tert-butyl-4-hydroxyphenyl)propionate are preferable. Examples of commercial phenolic antioxidants include "Irganox 1010" and "Irganox 1076" produced by BASF SE; and "ADEKA STAB AO-60" and "ADEKA STAB AO-50" produced by ADEKA

### CORPORATION.

The above phenolic antioxidants may be used alone or in combination of two or more.

In the case where the thermoplastic resin composition according to the present invention includes the phenolic antioxidant, the amount of the phenolic antioxidant used relative to 100 parts by mass of the thermoplastic resin component including the polycarbonate resin (A) and the polyester resin (B) is commonly 0.02 to 3 parts by mass, is particularly preferably 0.03 to 1 part by mass, and is especially preferably 0.04 to 0.5 parts by mass. When the amount of the phenolic antioxidant used is equal to or more than the above lower limit, the advantageous effect of using the phenolic antioxidant may be achieved with effect. The amount of the phenolic antioxidant used is set to be equal to or less than the above upper limit because using an excessively large amount of the phenolic antioxidant does not increase the advantageous effect beyond the maximum level and is not feasible in terms of cost effectiveness.

The thermoplastic resin composition according to the present invention preferably includes both phosphorus heat stabilizer and phenolic antioxidant. In such a case, it is preferable that the mass ratio between the phosphorus heat stabilizer and the phenolic antioxidant be Phosphorus heat stabilizer:Phenolic antioxidant = 1:0.2 to 3 and the total amount of the phosphorus heat stabilizer and the phenolic antioxidant used relative to 100 parts by mass of the thermoplastic resin component including the polycarbonate resin (A) and the polyester resin (B) be 0.04 to 2 parts by mass.

### (Organic Phosphate Ester Compound)

The thermoplastic resin composition according to the present invention may include the organic phosphate ester compound represented by General Formula (1) below in order to enhance heat stability.

(RO)ₙP(O)(OH)₃₋ₙ ... (1)

In General Formula (1), R represents an alkyl group that has 2 to 25 carbon atoms in total and may have a substituent; n represents 1 or 2; and, when n is 2, the two R's may be identical to or different from each other.

Examples of the unsubstituted alkyl group represented by R in General Formula (1) include an octyl group, a 2-ethylhexyl group, an isooctyl group, a nonyl group, an isononyl group, a decyl group, an isodecyl group, a dodecyl group, a tridecyl group, an isotridecyl group, a tetradecyl group, a hexadecyl group, an octadecyl group, and a stearyl group. Examples of the alkyl group having a substituent include an alkyl group to which a chain hydrocarbon group, such as a butyl group, an allyl group, or a methallyl group, is bound by an ether linkage or an ester linkage. It is preferable to use the alkyl group having a substituent as R. The total number of carbon atoms included in R, which includes the number of the carbon atoms included in the substituent, is preferably 5 or more.

The organic phosphate ester compound may be a mixture of compounds represented by General Formula (1) which have different R groups and different n values.

In the case where the thermoplastic resin composition according to the present invention includes the organic phosphate ester compound, the amount of the organic phosphate ester compound used relative to 100 parts by mass of the thermoplastic resin component including the polycarbonate resin (A) and the polyester resin (B) is commonly 0.02 to 3 parts by mass, is particularly preferably 0.03 to 1 part by mass, and is especially preferably 0.04 to 0.5 parts by mass. When the amount of the organic phosphate ester compound used is equal to or more than the above lower limit, the advantageous effect of using the organic phosphate ester compound to enhance heat stability may be achieved to a sufficient degree. The amount of the organic phosphate ester compound used is set to be equal to or less than the above upper limit because using an excessively large amount of the organic phosphate ester compound does not increase the advantageous effect beyond the maximum level and is not feasible in terms of cost effectiveness.

### <Release Agent (E)>

The release agent (E) is, for example, at least one compound selected from the group consisting of an aliphatic carboxylic acid, an ester of an aliphatic carboxylic acid with an alcohol, an aliphatic hydrocarbon compound having a number-average molecular weight of 200 to 15000, and a polysiloxane silicone oil.

Examples of the aliphatic carboxylic acid include saturated and unsaturated aliphatic monovalent, divalent, and trivalent carboxylic acids. The term "aliphatic carboxylic acid" used above refers also to an alicyclic carboxylic acid. Among the above aliphatic carboxylic acids, a monovalent or divalent carboxylic acid having 6 to 36 carbon atoms is preferable. An aliphatic saturated monovalent carboxylic acid having 6 to 36 carbon atoms is further preferable. Specific examples of such an aliphatic carboxylic acid include palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid.

The aliphatic carboxylic acid constituting the ester of an aliphatic carboxylic acid with an alcohol may be the same as the above aliphatic carboxylic acid. Examples of the alcohol include saturated and unsaturated monohydric and polyhydric alcohols. The above alcohols may include a substituent, such as a fluorine atom or an aryl group. Among the above alcohols, a monohydric or polyhydric saturated alcohol having 30 or less carbon atoms is preferable and an aliphatic saturated monohydric or polyhydric alcohol having 30 or less carbon atoms is further preferable. The term "aliphatic" used above refers also to an alicyclic compound. Specific examples of such an alcohol include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

The above ester compound may include an aliphatic carboxylic acid and/or an alcohol as an impurity. The above ester compound may be a mixture of plural compounds.

Specific examples of the ester of an aliphatic carboxylic acid with an alcohol include a beeswax (mixture including myricyl palmitate as a principal constituent), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.

Examples of the aliphatic hydrocarbon having a number-average molecular weight of 200 to 15000 include liquid paraffin, a paraffin wax, a microwax, a polyethylene wax, a Fischer-Tropsch wax, and an α-olefin oligomer having 3 to 12 carbon atoms. The term "aliphatic hydrocarbon" used above refers also to an alicyclic hydrocarbon. The above hydrocarbon compounds may be partially oxidized. Among the above aliphatic hydrocarbons, a paraffin wax, a polyethylene wax, and a partially oxidized polyethylene wax are preferable. A paraffin wax and a polyethylene wax are further preferable. The number-average molecular weight of the aliphatic hydrocarbon is preferably 200 to 5000. The above aliphatic hydrocarbons may be used alone as a single substance. Alternatively, aliphatic hydrocarbons having different compositions and different molecular weights may be used in a mixture as long as the principal constituent of the mixture falls within the above range.

Examples of the polysiloxane silicone oil include a dimethyl silicone oil, a phenyl methyl silicone oil, a diphenyl silicone oil, and fluorinated alkyl silicone. The above polysiloxane silicone oils may be used in combination of two or more.

In the case where the release agent (E) is used, the amount of the release agent (E) included in the thermoplastic resin composition according to the present invention is commonly 0.05 to 2 parts by mass and is preferably 0.1 to 1 part by mass relative to 100 parts by mass of the thermoplastic resin component including the polycarbonate resin (A) and the polyester resin (B). When the amount of the release agent used is equal to or more than the above lower limit, the advantageous effect to improve releasability may be achieved at a sufficient level. When the amount of the release agent used is equal to or less than the above upper limit, the degradation of hydrolysis resistance and mold contamination during injection molding, which may be caused as a result of the addition of an excessively large amount of the release agent, may be prevented.

### <Ultraviolet Absorber>

The thermoplastic resin composition according to the present invention may include an ultraviolet absorber. Adding the ultraviolet absorber to the thermoplastic resin composition according to the present invention may enhance the weather resistance of the thermoplastic resin composition. The improvement in weather resistance leads to limitation of transparency reduction.

Examples of the ultraviolet absorber include inorganic ultraviolet absorbers, such as cerium oxide and zinc oxide; and organic ultraviolet absorbers, such as a benzotriazole compound, a benzophenone compound, a salicylate compound, a cyanoacrylate compound, a triazine compound, an oxanilide compound, a malonate ester compound, and a hindered amine compound. Among the above ultraviolet absorbers, organic ultraviolet absorbers are preferable. A benzotriazole compound is more preferable. The use of an organic ultraviolet absorber may enhance the transparency and mechanical properties of the thermoplastic resin composition according to the present invention to suitable degrees.

Specific examples of the benzotriazole compound include 2-(2'-hydroxy-5'-methylphenyl)benzotriazole, 2-[2'-hydroxy-3',5'-bis(α,α-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole), 2-(2'-hydroxy-3',5'-di-tert-amyl)-benzotriazole, 2-(2'-hydroxy-5'-tert-octylphenyl)benzotriazole, and 2,2'-methylenebis[4-(1,1,3,3-tetramethylbutyl)-6-(2N-benzotriazole-2-yl)phenol]. Among the above benzotriazole compounds, 2-(2'-hydroxy-5'-tert-octylphenyl)benzotriazole and 2,2'-methylenebis[4-(1,1,3,3-tetramethylbutyl)-6-(2N-benzotriazole-2-yl)phenol] are preferable, and 2-(2'-hydroxy-5'-tert-octylphenyl)benzotriazole is particularly preferable.

Examples of commercial benzotriazole compounds include "SEESORB 701", "SEESORB 705", "SEESORB 703", "SEESORB 702", "SEESORB 704", and "SEESORB 709" produced by SHIPRO KASEI KAISHA, LTD.; "VIOSORB 520", "VIOSORB 582", "VIOSORB 580", and "VIOSORB 583" produced by KYODO CHEMICAL CO., LTD.; "KEMISORB 71" and "KEMISORB 72" produced by CHEMIPRO KASEI KAISHA, LTD.; "CYASORB UV5411" produced by Cytec Industries Inc.; "LA-32", "LA-38", "LA-36", "LA-34", and "LA-31" produced by ADEKA CORPORATION; and "TINUVIN P", "TINUVIN 234", "TINUVIN 326", "TINUVIN 327", and "TINUVIN 328" produced by Ciba Specialty Chemicals.

Specific examples of the benzophenone compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone.

Examples of commercial benzophenone compounds include "SEESORB 100", "SEESORB 101", "SEESORB 101S", "SEESORB 102", and "SEESORB 103" produced by SHIPRO KASEI KAISHA, LTD.; "VIOSORB 100", "VIOSORB 110", and "VIOSORB 130" produced by KYODO CHEMICAL CO., LTD.; "KEMISORB 10", "KEMISORB 11", "KEMISORB 11S", "KEMISORB 12", "KEMISORB 13", and "KEMISORB 111" produced by CHEMIPRO KASEI KAISHA, LTD.; "Uvinul 400" produced by BASF SE, "Uvinul M-40" produced by BASF SE, and "Uvinul MS-40" produced by BASF SE; "CYASORB UV9", "CYASORB UV284", "CYASORB UV531", and "CYASORB UV24" produced by Cytec Industries Inc.; and "ADK STAB 1413" and "ADK STAB LA-51" produced by ADEKA CORPORATION.

Specific examples of the salicylate compound include phenyl salicylate and 4-tert-butylphenyl salicylate.

Examples of commercial salicylate compounds include "SEESORB 201" and "SEESORB 202" produced by SHIPRO KASEI KAISHA, LTD.; and "KEMISORB 21" and "KEMISORB 22" produced by CHEMIPRO KASEI KAISHA, LTD.

Specific examples of the cyanoacrylate compound include ethyl-2-cyano-3,3-diphenylacrylate and 2-ethylhexyl-2-cyano-3,3-diphenylacrylate.

Examples of commercial cyanoacrylate compounds include "SEESORB 501" produced by SHIPRO KASEI KAISHA, LTD.; "VIOSORB 910" produced by KYODO CHEMICAL CO., LTD.; "Uvisolator 300" produced by Daiichi Kasei Co., Ltd.; and "Uvinul N-35" and "Uvinul N-539" produced by BASF SE.

Specific examples of the oxanilide compound include 2-ethoxy-2'-ethyl-oxalic acid-bisanilide.

Examples of commercial oxanilide compounds include "Saint Dubois VSU" produced by Clariant.

The malonate ester compound is preferably a 2-(alkylidene) malonate ester and is more preferably a 2-(1-arylalkylidene) malonate ester.

Examples of commercial malonate ester compounds include "PR-25" produced by Clariant Japan K.K.; and "B-CAP" produced by Ciba Specialty Chemicals.

The above ultraviolet absorbers may be used alone or in combination of two or more.

In the case where the thermoplastic resin composition according to the present invention includes the ultraviolet absorber, the amount of the ultraviolet absorber used is commonly 0.001 to 3 parts by mass, is preferably 0.01 to 1 part by mass, is more preferably 0.1 to 0.5 parts by mass, and is further preferably 0.1 to 0.4 parts by mass relative to 100 parts by mass of the thermoplastic resin component including the polycarbonate resin (A) and the polyester resin (B). When the amount of the ultraviolet absorber used is equal to or more than the above lower limit, the advantageous effect to enhance weather resistance may be achieved at a sufficient level. When the amount of the ultraviolet absorber used is equal to or less than the above upper limit, mold contamination due to mold deposit may be reduced.

### <Antistatic Agent>

The thermoplastic resin composition according to the present invention may include an antistatic agent as needed. The antistatic agent is not limited and is preferably the phosphonium sulfonate salt represented by General Formula (2) below.

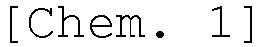

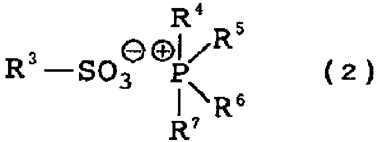

In General Formula (2), R³ is an alkyl or aryl group that has 1 to 40 carbon atoms and may include a substituent; and R⁴ to R⁷ each independently represent a hydrogen atom or an alkyl or aryl group having 1 to 10 carbon atoms, and they may be identical to or different from one another.

R³ in General Formula (2), which is an alkyl or aryl group having 1 to 40 carbon atoms, is preferably an aryl group from the viewpoint of transparency, heat resistance, and compatibility with the thermoplastic resin component, such as the polycarbonate resin (A). Specifically, R³ is preferably a group derived from an alkyl benzene or naphthalene ring substituted with an alkyl group having 1 to 34 carbon atoms, preferably having 5 to 20 carbon atoms, and particularly preferably having 10 to 15 carbon atoms. R⁴ to R⁷ in General Formula (2), which each independently represent a hydrogen atom or an alkyl or aryl group having 1 to 10 carbon atoms, are preferably alkyl groups having 2 to 8 carbon atoms, are further preferably alkyl groups having 3 to 6 carbon atoms, and are particularly preferably butyl groups.

Specific examples of the phosphonium sulfonate salt include tetrabutylphosphonium dodecylsulfonate, tetrabutylphosphonium dodecylbenzenesulfonate, tributyloctylphosphonium dodecylbenzenesulfonate, tetraoctylphosphonium dodecylbenzenesulfonate, tetraethylphosphonium octadecylbenzenesulfonate, tributylmethylphosphonium dibutylbenzenesulfonate, triphenylphosphonium dibutylnaphthylsulfonate, and trioctylmethylphosphonium diisopropylnaphthylsulfonate. Among the above phosphonium sulfonate salts, tetrabutylphosphonium dodecylbenzenesulfonate is preferable from the viewpoint of compatibility with the polycarbonate resin (A) and ease of availability.

The above phosphonium sulfonate salts may be used alone or in combination of two or more.

In the case where the thermoplastic resin composition according to the present invention includes the antistatic agent, the amount of the antistatic agent is preferably 0.1 to 5.0 parts by mass, is more preferably 0.2 to 3.0 parts by mass, is further preferably 0.3 to 2.0 parts by mass, and is particularly preferably 0.5 to 1.8 parts by mass relative to 100 parts by mass of the thermoplastic resin component including the polycarbonate resin (A) and the polyester resin (B). If the amount of the antistatic agent used is less than 0.1 parts by mass, the intended antistatic effect may fail to be achieved. If the amount of the antistatic agent used is more than 5.0 parts by mass, transparency and mechanical strength may be reduced and, consequently, silver streaks and delamination may occur on the surface of the molded article, that is, the appearance of the molded article may become degraded.

### <Colorant>

The thermoplastic resin composition according to the present invention may include various types of dyes and pigments as colorants as needed. Adding a dye or pigment to the thermoplastic resin composition according to the present invention may enhance the shielding property and weather resistance of the thermoplastic resin composition. Adding a colorant to the thermoplastic resin composition according to the present invention may also enhance the design quality of a molded article formed by molding the thermoplastic resin composition.

Examples of the dyes and pigments include an inorganic pigment, an organic pigment, and an organic dye.

Examples of the inorganic pigment include carbon black, sulfide pigments, such as cadmium red and cadmium yellow; silicate pigments, such as ultramarine; oxide pigments, such as titanium oxide, Chinese white, rouge, chromium oxide, iron black, titanium yellow, zinc-iron brown, cobalt titanate green, cobalt green, cobalt blue, copper-chromium black, and copper-iron black; chromate pigments, such as chrome yellow and molybdate orange; and ferrocyanide pigments, such as Prussian blue.

Examples of the organic pigments and dyes include phthalocyanine dyes and pigments, such as copper phthalocyanine blue and copper phthalocyanine green; azo dyes and pigments, such as nickel azo yellow; condensed polycyclic dyes and pigments, such as thioindigo dyes and pigments, perinone dyes and pigments, perylene dyes and pigments, quinacridone dyes and pigments, dioxazine dyes and pigments, isoindolinone dyes and pigments, quinoline dyes and pigments, and quinophthalone dyes and pigments; and cyanine dyes and pigments, anthraquinone dyes and pigments, heterocyclic dyes and pigments, and methyl dyes and pigments.

Among the above dyes and pigments, for example, titanium oxide, carbon black, cyanine dyes and pigments, quinoline dyes and pigments, anthraquinone dyes and pigments, and phthalocyanine compounds are preferable from the viewpoint of heat stability.

The above colorants may be used alone. Alternatively, two or more colorants may be used in any combination at any ratio.

The colorant may be used in the form of a masterbatch prepared by mixing the colorant with the polycarbonate resin (A) and the other resins in order to improve ease of handling during extrusion and dispersibility in the resin composition.

In the case where the thermoplastic resin composition according to the present invention includes the colorant, the amount of the colorant used may be selected appropriately in accordance with the intended design quality and is commonly 0.001 parts by mass or more, is preferably 0.005 parts by mass or more, and is more preferably 0.01 parts by mass or more; and is commonly 3 parts by mass or less, is preferably 2 parts by mass or less, is more preferably 1 part by mass or less, and is further preferably 0.5 parts by mass or less, relative to 100 parts by mass of the thermoplastic resin component including the polycarbonate resin (A) and the polyester resin (B). If the amount of the colorant used is less than the above lower limit, the intended coloring effect may fail to be achieved to a sufficient degree. If the amount of the colorant used is more than the above upper limit, mold deposit and the like may occur. This may cause mold contamination.

### [Method for Producing Thermoplastic Resin Composition]

It is not possible to unconditionally determine the conditions under which kneading is performed in the production of the thermoplastic resin composition according to the present invention, because the kneading conditions vary by the types of the components of the thermoplastic resin composition and the mixing ratio between the components. In particular, in the case where glass fibers are used as a glass filler (C), it is preferable to melt-knead the glass fibers separately from the other components. Specifically, for performing melt-kneading using an extruder, it is preferable to melt-knead the glass fibers with an extruder by feeding the glass fibers to a melt-kneaded mixture prepared by melt-kneading the other components, such as the polycarbonate resin (A) and the polyester resin (B), to a sufficient degree, at a midpoint of the extruder by a side feeding method, in order to reduce the breakage and bending of the glass fibers which may occur during melt-kneading and maintain the shapes of the glass fibers.

In such a case, it is preferable to feed the glass fibers when the resin component is melt-kneaded to a sufficient degree. In this regard, it is preferable to perform the side feeding at a downstream position of the extruder. However, if the side feeding position is excessively close to the downstream end, the glass fibers may be extruded before the glass fibers have been dispersed in the resin composition to a sufficient degree. In this regard, it is particularly preferable to feed the glass fibers at a position about 1/5 to 4/5 of the barrel length L from the upstream (hopper part) of the extruder in the downstream direction by side feeding.

The L/D (barrel length/screw diameter) of the extruder used in the melt extrusion is not limited and is commonly about 25 to 50. It is preferable to set the rotational speed of the screw to 150 to 600 rpm and the cylinder temperature to about 250°C to 300°C.

The strands melt-extruded from the extruder are rapidly cooled in a water tank and cut into pieces with a pelletizer to form pellets of the thermoplastic resin composition according to the present invention.

### [Thermoplastic Resin Molded Article]

The method for producing a molded article using the thermoplastic resin composition according to the present invention is not limited; molding methods commonly used for thermoplastic resins, such as a common injection molding method, ultra-high speed injection molding, injection compression molding, multi-color injection molding, gas-assisted injection molding, a molding method in which a heat-insulation mold is used, a molding method in which a rapid heating-cooling mold is used, foam molding (including supercritical fluid), insert molding, IMC (in-mold coating molding) molding, extrusion molding, sheet molding, heat molding, rotational molding, laminate molding, and press molding, may be used. In the above injection molding methods, a hot runner system may be optionally used.

The thermoplastic resin composition according to the present invention and another thermoplastic resin composition may be formed into a composite molded article by multi-color composite molding.

In the injection molding of the thermoplastic resin composition according to the present invention, a metal member may be inserted into a mold and the thermoplastic resin composition may be injection-molded with the mold to form a composite molded article including the metal member.

In the injection molding of the thermoplastic resin composition according to the present invention, a glass member may be inserted into a mold and the thermoplastic resin composition may be injection-molded with the mold to form a composite molded article including the glass member.

It is preferable that the molded article according to the present invention has a surface, and 30% or more of the entire surface of the molded article is smooth to have a surface roughness Ra of 0.1 µm or less. When the molded article according to the present invention has the above-described surface smoothness, scattering of light on the surface of the molded article may be reduced and further high transparency may be achieved. In order to enhance transparency by reducing the light scattering, the smooth surface having a surface roughness Ra of 0.1 µm or less preferably occupies an ornamental portion of the surface of the molded article.

The area of the smooth surface having a surface roughness Ra of 0.1 µm or less is preferably maximized from the viewpoint of transparency and is more preferably 50% or more of the entire surface area of the molded article. From the viewpoint of transparency, it is sufficient to set the area of the smooth surface to 70% or more of the entire surface area of the molded article, although it varies by the shape and application of the molded article. The upper limit for the area of the smooth surface is normally 100%.

For producing a molded article by injection molding of the thermoplastic resin composition according to the present invention so as to produce a molded article having further high transparency, it is preferable to perform injection molding using a heat-insulation mold or perform injection molding using a rapid heating-cooling mold by heat-and-cool molding, in accordance with the method for producing a molded article according to the present invention as described below.

### {Method for Producing Molded Article}

A method for producing a molded article according to an embodiment of the present invention includes performing injection molding of the thermoplastic resin composition according to the present invention with a heat-insulation mold. In one embodiment, the mold has a cavity and a ceramic layer disposed on a surface of the cavity. In another embodiment, the mold has a cavity, a metal layer disposed on a surface of the cavity, and a thermosetting resin layer disposed on the metal layer.

A method for producing a molded article according to another embodiment of the present invention includes conducting an injection step when the temperature of the cavity surface of the mold is 130°C or more using a rapid heating-cooling mold, and conducting a mold opening step when the temperature of the cavity surface of the mold is 80°C or less (hereinafter, this method is referred to as "heat-and-cool molding").

### [Mechanisms]

Both of the methods for producing a molded article may reduce the rising of the glass filler (C) to the surface of the molded article and enable the formation of a smooth surface. This reduces the scattering of light on the surface of the molded article and consequently improves transparency.

In the case where a heat-insulation mold is used, the amount of heat dissipated from the molten resin injected inside the mold is reduced and the resins, which has higher flowability than the glass filler (C), are allowed to flow in the surface-layer portion of the molded article. This reduces the rising of the glass filler (C) to the surface.

Heat-and-cool molding enables the molten resin injected inside the cavity to be slowly cooled and consequently also reduces the rising of the glass filler (C) to the surface.

### [Molding Method in Which Heat-Insulation Mold Is Used]

The heat-insulation mold used in the present invention is a mold including a ceramic layer disposed on the cavity surface (hereinafter, this mold may be referred to as "ceramic heat-insulation mold") or a mold including a metal layer and a thermosetting resin layer disposed on and above the cavity in order closest to the cavity (hereinafter, this mold may be referred to as "resin heat-insulation mold").

Examples of the ceramic heat-insulation mold include a mold that includes a mold main body made of a metal and a ceramic cover plate (insert) disposed on the cavity surface of the mold main body. The type of the ceramic is not limited and may be any ceramic excellent in terms of heat-insulating property, heat resistance, and stability. A ceramic having a thermal conductivity of 5 W/m·K or less, such as zirconium oxide (ZrO₂: zirconia), is preferable. The zirconia may be partially stabilized zirconia that includes one or more partial stabilizers selected from calcia (calcium oxide, CaO), yttria (yttrium oxide, Y₂O₃), magnesia (magnesium oxide, MgO), silica (silicon oxide, SiO₂), and ceria (cerium oxide, CeO₂) or may be electrically conductive zirconia that includes one or more electrical conductivityimparting agents selected from Fe₂O₃, NiO, Co₃O₄, Cr₂O₃, TiO₂, TiN, TiC, WC, TaC, and the like.

The thickness of the ceramic layer is not limited and may be set such that the intended heat-insulating property can be achieved. The thickness of the ceramic layer is normally 0.1 to 10 mm, is preferably 0.5 to 10 mm, is more preferably 1 to 7 mm, and is further preferably 2 to 5 mm. If the thickness of the ceramic layer is excessively small, a sufficiently large heat-insulating property may fail to be achieved and the improvement in transparency is small compared with the case where a common mold is used. If the thickness of the ceramic layer is excessively large, the heat insulation effect may be increased to an excessive level and a large amount of time may be required to cool the molten resin inside the cavity. This increases the molding cycle time.

Examples of the resin heat-insulation mold include a mold that includes a mold main body made of a metal, a metal layer disposed on the cavity surface of the mold main body, and a thermosetting resin layer interposed between the mold main body and the metal layer. The thermosetting resin layer serves as a heat-insulating layer and also as an adhesive layer with which the mold main body and the metal layer are bonded to each other. Examples of the thermosetting resin include an epoxy acrylate resin, a phenolic resin, an epoxy resin, a melamine resin, a urea resin, an unsaturated polyester resin, an alkyd resin, polyurethane, and thermosetting polyimide. The above thermosetting resins commonly have a thermal conductivity of about 0.3 to 3 W/m·K.

The thermosetting resin may include inorganic particles, such as glass beads, as a reinforcement. The shape of the inorganic particles is preferably spherical. The average size of the inorganic particles is about 1 to 100 µm. The content of the inorganic particles in the thermosetting resin layer is preferably 60% to 90% by mass.

The thickness of the thermosetting resin layer varies with the heat-insulating property (thermal conductivity) of the thermosetting resin and is preferably about 0.2 to 1.5 mm.

Specific examples of the material for the metal layer constituting the cavity surface include steels, such as an alloy tool steel, a die steel, a tool steel, and a martensitic stainless steel; and thin-films composed of chromium, zinc, nickel, diamond, and the like. The material for the metal layer is preferably a steel that has been subjected to a processing treatment, such as a quenching treatment. The thickness of the metal layer is normally about 0.2 to 1.5 mm.

The metal layer may be formed on the surface of the thermosetting resin layer by plating. Alternatively, a thin sheet made of a quenched steel may be bonded to the thermosetting resin layer with a thermosetting resin.

A ceramic reinforcement layer may be interposed between the metal layer and the thermosetting resin layer as needed.

The injection molding of the thermoplastic resin composition according to the present invention using a heat-insulation mold, such as a ceramic heat-insulation mold or a resin heat-insulation mold, may be performed under the same conditions as in injection molding using a common mold; the following injection molding conditions may be used: cylinder temperature of the injection molding machine: 280°C to 320°C, mold temperature: 60°C to 100°C.

### [Heat-and-Cool Molding]

The rapid heating-cooling mold used in heat-and-cool molding is capable of instantly performing a switchover between heating and cooling media that are to be circulated through the medium channel of the mold with a mold temperature-controlling device. In heat-and-cool molding, using the above rapid heating-cooling mold, heating medium is fed to the medium channel of the mold at least during the period of time from when the mold is opened to when charging of the molten resin is completed, while cooling medium is fed to the medium channel of the mold at least during the period of time from when charging of the molten resin is completed to when the mold is opened, in order to conduct the injection step at a temperature equal to or higher than the predetermined mold cavity temperature and, after changing the heating medium to the cooling medium upon the completion of the injection step, conduct the mold opening step at a temperature equal to or lower than the predetermined mold cavity temperature.

In the heat-and-cool molding method used in the present invention, the injection step in which the molten resin is injected into the mold is conducted when the mold cavity temperature is increased to 130°C or more and preferably to 130°C to 160°C by a heating medium having a temperature of about 200°C to 320°C, the heating medium is subsequently changed to a cooling medium having a temperature of about 40°C to 60°C upon the completion of the injection step, and the mold is opened when the mold cavity temperature is reduced to 80°C or less and preferably to 50°C to 80°C.

The amount of time during which holding is performed since the completion of the injection step until the mold is opened in order to change the heating medium to the cooling medium upon the completion of the injection step is preferably about 50 seconds or less and is particularly preferably about 15 to 40 seconds.

The cylinder temperature of the injection molding machine used in the injection molding of the thermoplastic resin composition may be 280°C to 320°C, which is a common temperature condition.

### {Applications}

The thermoplastic resin composition according to the present invention and a molded article produced by the injection molding of the thermoplastic resin composition have excellent properties, such as dimensional stability, stiffness (bending strength), and heat resistance, as a result of including the glass filler (C). In addition, excellent transparency is achieved.

The thermoplastic resin composition according to the present invention and a molded article produced by the injection molding of the thermoplastic resin composition may be suitably used in the production of various products, such as cameras, office automation equipment, audio-visual apparatuses, communication equipment, information terminal equipment, such as mobile phones and tablets, precision equipment, electrical and electric components, vehicle components, such as automotive components, general machine components, building components, leisure goods, sundries, various containers, protection housings, and lighting equipment. The thermoplastic resin composition and the molded article may be particularly suitably used in the production of cameras, office automation equipment, audio-visual apparatuses, information terminal equipment, such as mobile phones and tablets, electrical and electric components, automotive components, railway vehicle components, aircraft components, building components, and protection housings, where prime importance is placed on transparency. Specific examples of the application of the thermoplastic resin composition and the molded article to office automation equipment, audio-visual apparatuses, and information terminal equipment include a cover for touch panel displays.

### {Sheet}

A sheet according to the present invention is composed of the thermoplastic resin composition according to the present invention.

The term "sheet" used herein refers generally to a thin and flat object the thickness of which is small relative to the length and width of the object. The term "film" used herein refers to an object the thickness of which is considerably small relative to the length and width of the object, which is thinner than a sheet, and which is commonly provided in the form of a roll. A "sheet" and a "film" are not clearly distinguishable from each other. The term "sheet" used herein refers also to a "film".

The method for producing the sheet according to the present invention is not limited. A melt extrusion method (e.g., T-die molding) is suitably used. The conditions under which the sheet is molded by the above method are not limited. With an extrusion molding machine equipped with two mirror-finished cooling rollers disposed in the vicinity of the T-die, pinching a sheet-like molten resin ejected from the T-die between the two cooling rollers the temperature of which has been controlled to be 100°C to 140°C may enhance the smoothness of the surface of the sheet and enable the production of a sheet having further high transparency. The higher the pressure at which the molten resin is pinched between the cooling rollers, the higher the degree to which the smoothness of the surface of the sheet is enhanced and the higher the transparency of the sheet.

The thickness of the sheet according to the present invention is preferably 0.2 to 2 mm, is more preferably 0.25 to 1.9 mm, and is further preferably 0.3 to 1.8 mm. When the above thickness is equal to or more than the above lower limit, suitable stiffness may be maintained. When the above thickness is equal to or less than the above upper limit, a sheet having excellent transparency may be produced.

The sheet according to the present invention may be used alone. In another case, the sheet may be disposed on an unreinforced thermoplastic resin to serve as a surface layer of the unreinforced thermoplastic resin.

The application of the sheet according to the present invention is not limited. The sheet may be used as a sheet member or the like included in cameras, office automation equipment, audio-visual apparatuses, communication equipment, information terminal equipment, such as mobile phones and tablets, precision equipment, electrical and electric components, vehicle components, such as automotive components, general machine components, building components, leisure goods, sundries, various containers, protection housings, lighting equipment, and the like.

### EXAMPLES

The present invention is described more specifically with reference to Examples below. A variety of changes and modifications may be made within the scope of the present invention as defined by the appended claims.

Tables 1A and 1B describe the components used in Examples and Comparative examples below.

**[Table 1A]**

| | | |
|---|---|---|
| | A1 | Aromatic polycarbonate resin |
| | | produced by interfacial polymerization using bisphenol A as starting material |
| | | Viscosity-average molecular weight: 20,400 |
| Polycarbonate resin (A) according to the present invention | A2 | Aromatic polycarbonate resin |
| | | produced by interfacial polymerization using bisphenol A as starting material |
| | | Viscosity-average molecular weight: 19,800 |
| | A3 | Aromatic polycarbonate resin |
| | | produced by interfacial polymerization using bisphenol A as starting material |
| | | Viscosity-average molecular weight: 16,000 |
| | A4 | Aromatic polycarbonate resin |
| | | produced by interfacial polymerization using bisphenol A as starting material |
| | | Viscosity-average molecular weight: 14,000 |
| | a1 | Aromatic polycarbonate resin |
| | | produced by interfacial polymerization using bisphenol A as starting material |
| | | Viscosity-average molecular weight: 24,200 |
| Polycarbonate resin (a) used in Comparative examples | a2 | Aromatic polycarbonate resin |
| | | produced by interfacial polymerization using bisphenol A as starting material |
| | | Viscosity-average molecular weight: 23,100 |
| | a3 | Aromatic polycarbonate resin |
| | | produced by interfacial polymerization using bisphenol A as starting material |
| | | Viscosity-average molecular weight: 12,000 |
| Polyester resin (B) | B1 | Polyester resin |
| | | including terephthalic acid residue, CHDM residue, and TMCD residue |
| | | Produced by EASTMAN Chemical Company, product name: Tritan TX2000 |

**[Table 1B]**

| | | |
|---|---|---|
| | C1 | Circular cross-section glass fibers |
| | | Fiber diameter: 13 µm, number-average fiber length: 3.0 mm |
| | | Produced by Nippon Electric Glass Co., Ltd., product mane: T571 |
| | C2 | Flattened cross-section glass fibers |
| | | Major axis length: 28 µm, minor axis length: 7µm, flattening factor: 4, number-average fiber length: 3.0 mm |
| | | Produced by Nippon Electric Glass Co., Ltd., product mane: ECS03 951EW |
| | C3 | Flattened cross-section glass fibers |
| Glass filler (C) | | Major axis length: 28 µm, minor axis length: 7 µm, flattening factor: 4, number-average fiber length: 3.0 mm |
| | | Produced by Nitto Boseki Co., Ltd., product name: CSG 3PA-820S |
| | C4 | Glass flakes |
| | | Thickness: 5 µm, average particle size: 600 µm |
| | | Produced by Nippon Sheet Glass Company, Ltd, product name: REFG-315 |
| | C5 | Glass flakes |
| | | Thickness: 0.7 µm, average particle size: 160 µm |
| | | Produced by Nippon Sheet Glass Company, Ltd, product name: MEG160FY-M03 |
| Stabilizer (D) | D1 | Tris(2,4-di-tert-butylphenyl) phosphite |
| | | Produced by ADEKA CORPORATION, product name: ADEKA STAB 2112 |
| | D2 | Pentaerythritol-tetrakis[3-(3,5-di-tert-butyl-4-hydroxyphenyl)propionate] |
| | | Produced by BASF, product name: Irganox 1010 |
| | D3 | Mixture of mono and distearyl acid phosphate |
| | | Produced by ADEKA CORPORATION, product name: AX-71 |
| Release agent (E) | E1 | Pentaerythritol tetrastearate |
| | | Produced by Cognis Japan Ltd., product name: Loxiol VPG 861 |
| | E2 | Stearic acid |
| | | Produced by NOF CORPORATION, product name: NAA 180 |

### {Examples and Comparative Examples of Injection Molded Article}

### [Examples I-1 to I-26 and Comparative Examples I-1 to I-18]

### <Production of Pellets of Thermoplastic Resin Composition>

The components described in Tables 1A and 1B except the glass filler (C) were mixed with one another at the proportions (mass part) described in Tables 2 to 7. The resulting mixture was stirred for 20 minutes in a tumbler and then fed to a twin-screw extruder (TEM26SX) produced by Toshiba Machine Co., Ltd. having one vent through a feeder disposed in the upstream portion. In addition, the glass filler (C) was fed to the extruder at a midpoint of the barrel (position 3/5 of the barrel length L from the upstream (hopper part) of the extruder in the downstream direction). The resulting mixture was kneaded at a rotational speed of 250 rpm, a discharge rate of 25 kg/hour, and a barrel temperature of 280°C. A molten resin extruded from the extruder in the form of a strand was rapidly cooled in a water tank and formed into pellets with a pelletizer. Hereby, pellets of a thermoplastic resin composition were prepared. In Comparative examples I-8 and 16, it was not possible to prepare the pellets because of the strong vibration of the strand, which made it difficult to draw the strand.

### <Preparation of Flat Plate Using Common Mold>

The pellets prepared by the production method described above were dried at 100°C for 5 hours and subsequently injection-molded with an injection molding machine (model: SE50DUZ) produced by Sumitomo Heavy Industries, Ltd. at a cylinder temperature of 290°C and a mold temperature of 100°C to form a flat plate having a length of 50 mm, a width of 40 mm, and a thickness of 2 mm. The mold used was a mold that included inserts made of SUS420J2, the inserts constituting the stationary-side and moving-side cavities of the mold.

### <Preparation of Flat Plate Using Heat-Insulation Mold>

The pellets prepared by the production method described above were dried at 100°C for 5 hours and subsequently injection-molded with an injection molding machine (model: S-2000i150B) produced by FANUC CORPORATION at a cylinder temperature of 290°C and a mold temperature of 100°C to form a flat plate having a length of 100 mm, a width of 100 mm, and a thickness of 2 mm. The mold used was a heat-insulation mold that included zirconium oxide (ZrO₂) plates having a size of 100 mm × 100 mm × 3 mm, the zirconium oxide plates being disposed on the stationary-side and moving-side cavity surfaces of the mold.

### <Preparation of Flat Plate By Heat-and-Cool Molding>

The pellets prepared by the production method described above were dried at 100°C for 5 hours and subsequently injection-molded with an injection molding machine (model: S-2000i150B) produced by FANUC CORPORATION at a cylinder temperature of 290°C to form a flat plate having a length of 50 mm, a width of 40 mm, and a thickness of 2 mm. In the injection molding, an oil having a temperature of 300°C was circulated through the mold channels using a rapid heating-cooling mold that included "MCJ-OM-250AA" produced by MATSUI MFG. CO., LTD. as a mold temperature-controlling device. The circulation of the oil having a temperature of 300°C was stopped when the temperature of the cavity surface of the mold reached 160°C and, subsequently, the injection step was conducted. Upon the termination of the injection step, an oil having a temperature of 40°C was circulated through the mold channels. When the temperature of the cavity surface of the mold reached 80°C, the mold opening step was conducted. Thus, a molded article having the above-described shape was prepared. The mold used was a mold that included inserts made of SUS420J2, the inserts constituting the stationary-side and moving-side cavities of the mold. The amount of time during which holding was performed since the completion of the injection step until the mold was opened was 25 seconds.

### <Measurement of Haze of Injection Molded Article>

The haze of the flat sheet prepared by the above method was measured with a haze meter "NDH4000" produced by Nippon Denshoku Industries Co., Ltd. The lower the haze value, the higher the transparency. The haze values of an injection molded article produced using the heat-insulation mold and an injection molded article produced by the heat-and-cool molding are preferably 15% or less. The haze value of an injection molded article produced using the common mold is preferably 55% or less.

Tables 2 to 7 describe the results of measurement of haze.

In Comparative example I-18, the injection molded article became cloudy and the haze of the injection molded article could not be measured.

### <Measurement of Surface Roughness of Injection Molded Article>

The surface roughness Ra of the flat sheet prepared by the above method was measured using "SURFCOM 3000A" produced by TOKYO SEIMITSU CO., LTD. with a cutoff wavelength λc of 0.8 mm, a cutoff mode of Gaussian, a λs value of 2.67 µm, and an evaluation length of 8 mm. The lower the Ra value, the higher the smoothness of the surface of the molded article. It is preferable to adjust the Ra value to 0.1 µm or less in order to produce a molded article having excellent transparency.

**[Table 2]**

| | | | Example I-1 | Example I-2 | Example I-3 | Example I-4 | Example I-5 | Example I-6 | Example I-7 |
|---|---|---|---|---|---|---|---|---|---|
| | Polycarbonate resin (A) * | A1(20,400) | | | | 50 | | | |
| | | A2(19,800) | 50 | | | | 50 | | |
| | | A3(16,000) | | 50 | | | | 50 | |
| | | A4(14,000) | | | 50 | | | | 50 |
| | Polycarbonate resin (a) * | a1(24,200) | | | | | | | |
| | | a2(23,100) | | | | | | | |
| | | a3(12,000) | | | | | | | |
| Composition of thermoplastic resin composition (mass part) | Polyester resin (B) | B1 | 50 | 50 | 50 | 50 | 50 | 50 | 50 |
| | Glass filler (C) | C1 | 25 | 25 | 25 | | | | |
| | | C2 | | | | 25 | 25 | 25 | 25 |
| | | C3 | | | | | | | |
| | | C4 | | | | | | | |
| | | C5 | | | | | | | |
| | Stabilizer (D) | D1 | 0.04 | 0.04 | 0.04 | 0.04 | 0.04 | 0.04 | 0.04 |
| | | D2 | 0.13 | 0.13 | 0.13 | 0.13 | 0.13 | 0.13 | 0.13 |
| | | D3 | 0.04 | 0.04 | 0.04 | 0.04 | 0.04 | 0.04 | 0.04 |
| | Release agent (E) | E1 | 0.25 | 0.25 | 0.25 | 0.25 | 0.25 | 0.25 | 0.25 |
| | | E2 | | | | | | | |
| Haze [%] | | Molding using common mold | 35 | 34 | 34 | 29 | 28 | 27 | 27 |
| | | Molding using heat-insulation mold | 14 | 13 | 13 | 8 | 7 | 6 | 6 |
| | | Heat-and-cool Molding | 15 | 14 | 15 | 8 | 8 | 7 | 8 |
| Ra [µm] | | Molding using common mold | 0.24 | 0.22 | 0.21 | 0.21 | 0.20 | 0.19 | 0.18 |
| | | Molding using heat-insulation mold | 0.03 | 0.03 | 0.03 | 0.03 | 0.03 | 0.03 | 0.03 |
| | | Heat-and-cool Molding | 0.03 | 0.03 | 0.03 | 0.03 | 0.03 | 0.03 | 0.02 |

| | | | | | | | | | |
|---|---|---|---|---|---|---|---|---|---|
| * Values in parentheses are viscosity-average molecular weights | | | | | | | | | |

**[Table 3]**

| | | | Example I-8 | Example I-9 | Example I-10 | Example I-11 | Example I-23 | Example I-24 | Example I-25 | Example I-26 |
|---|---|---|---|---|---|---|---|---|---|---|
| | Polycarbonate resin (A) * | A1(20,400) | | | | | | | | |
| | | A2(19,800) | | | | | | | | |
| | | A3(16,000) | 50 | 56 | 44 | 30 | 32 | 35 | 32 | 35 |
| | | A4(14,000) | | | | | | | | |
| | Polycarbonate resin (a) * | a1(24,200) | | | | | | | | |
| | | a2(23,100) | | | | | | | | |
| | | a3(12,000) | | | | | | | | |
| | Polyester resin (B) | B1 | 50 | 44 | 56 | 70 | 68 | 65 | 68 | 65 |
| Composition of thermoplastic resin composition (mass part) | Glass filler (C) | C1 | | | | | | | | |
| | | C2 | 25 | 25 | 25 | | | | | |
| | | C3 | | | | 25 | 10 | | 10 | |
| | | C4 | | | | | 15 | 25 | | |
| | | C5 | | | | | | | 15 | 25 |
| | Stabilizer (D) | D1 | | 0.04 | 0.04 | 0.04 | 0.04 | 0.04 | 0.04 | 0.04 |
| | | D2 | 0.13 | 0.13 | 0.13 | 0.13 | 0.13 | 0.13 | 0.13 | 0.13 |
| | | D3 | 0.04 | 0.04 | 0.04 | 0.04 | 0.04 | 0.04 | 0.04 | 0.04 |
| | Release agent (E) | E1 | 0.25 | 0.25 | 0.25 | 0.25 | 0.25 | 0.25 | 0.25 | 0.25 |
| | | E2 | | | | | | | | |
| Haze [%] | | Molding using common mold | 26 | 28 | 29 | 28 | 25 | 22 | 25 | 24 |
| | | Molding using heat-insulation mold | 6 | 7 | 8 | 7 | 9 | 9 | 10 | 11 |
| | | Heat-and-cool Molding | 7 | 8 | 8 | 7 | 9 | 10 | 10 | 11 |
| Ra [µm] | | Molding using common mold | 0.19 | 0.20 | 0.20 | 0.17 | 0.15 | 0.12 | 0.16 | 0.13 |
| | | Molding using heat-insulation mold | 0.03 | 0.03 | 0.03 | 0.03 | 0.02 | 0.02 | 0.03 | 0.02 |
| | | Heat-and-cool Molding | 0.03 | 0.03 | 0.03 | 0.03 | 0.03 | 0.02 | 0.03 | 0.02 |

| | | | | | | | | | | |
|---|---|---|---|---|---|---|---|---|---|---|
| * Values in parentheses are viscosity-average molecular weights | | | | | | | | | | |

**[Table 4]**

| | | | Comparative example I-1 | Comparative example I-2 | Comparative example I-3 | Comparative example I-4 | Comparative example I-5 | Comparative example I-6 | Comparative example I-7 | Comparative example I-8 |
|---|---|---|---|---|---|---|---|---|---|---|
| | Polycarbonate resin (A) * | A1(20,400) | | | | | | | | |
| | | A2(19,800) | | | | | | | | |
| | | A3(16,000) | | | 73 | 15 | | | | |
| | | A4(14,000) | | | | | | | | |
| | Polycarbonate resin (a) * | a1(24,200) | | 50 | | | 50 | 56 | 44 | |
| | | a2(23,100) | 50 | | | | | | | |
| | | a3(12,000) | | | | | | | | 50 |
| Composition of thermoplastic resin composition (mass part) | Polyester resin (B) | B1 | 50 | 50 | 27 | 85 | 50 | 44 | 56 | 50 |
| | Glass filler (C) | C1 | 25 | 25 | | | | | | |
| | | C2 | | | 25 | 25 | 25 | 25 | 25 | 25 |
| | | C3 | | | | | | | | |
| | | C4 | | | | | | | | |
| | | C5 | | | | | | | | |
| | Stabilizer (D) | D1 | 0.04 | 0.04 | 0.04 | 0.04 | 0.04 | 0.04 | 0.04 | 0.04 |
| | | D2 | 0.13 | 0.13 | 0.13 | 0.13 | 0.13 | 0.13 | 0.13 | 0.13 |
| | | D3 | 0.04 | 0.04 | 0.04 | 0.04 | 0.04 | 0.04 | 0.04 | 0.04 |
| | Release agent (E) | E1 | 0.25 | 0.25 | 0.25 | 0.25 | 0.25 | 0.25 | 0.25 | 0.25 |
| | | E2 | | | | | | | | |
| Haze [%] | | Molding using common mold | 42 | 46 | 63 | 77 | 39 | 38 | 41 | Difficult to draw strand |
| | | Molding using heat-insulation mold | 21 | 25 | 41 | 54 | 20 | 19 | 22 | |
| | | Heat-and-cool Molding | 21 | 26 | 43 | 55 | 22 | 20 | 22 | |
| Ra [µm] | | Molding using common mold | 0.26 | 0.26 | 0.25 | 0.16 | 0.24 | 0.25 | 0.24 | |
| | | Molding using heat-insulation mold | 0.04 | 0.03 | 0.04 | 0.03 | 0.03 | 0.03 | 0.03 | |
| | | Heat-and-cool Molding | 0.03 | 0.04 | 0.04 | 0.03 | 0.03 | 0.03 | 0.03 | |

| | | | | | | | | | | |
|---|---|---|---|---|---|---|---|---|---|---|
| * Values in parentheses are viscosity-average molecular weights | | | | | | | | | | |

**[Table 5]**

| | | | Example I-12 | Example I-13 | Example I-14 | Example I-15 | Example I-16 | Comparative example I-9 | Comparative example I-10 | Comparative example I-11 | Comparative example I-12 | Comparative example I-13 | Comparative example I-14 |
|---|---|---|---|---|---|---|---|---|---|---|---|---|---|
| | Polycarbonate resin (A) * | A1(20,400) | | | | | | | | | | | |
| | | A2(19,800) | 50 | | 50 | | | | | | | | |
| | | A3(16,000) | | 50 | | 50 | | | 73 | 15 | | | |
| | | A4(14,000) | | | | | 50 | | | | | | |
| | Polycarbonate resin (a) * | a1(24,200) | | | | | | 50 | | | 50 | 56 | 44 |
| | | a2(23, 100) | | | | | | | | | | | |
| Composition of thermoplastic resin composition (mass part) | | a3(12,000) | | | | | | | | | | | |
| | Polyester resin (B) | B1 | 50 | 50 | 50 | 50 | 50 | 50 | 27 | 85 | 50 | 44 | 56 |
| | Glass filler (C) | C1 | 11 | 11 | | | | 11 | | | | | |
| | | C2 | | | 11 | 11 | 11 | | 11 | 11 | 11 | 11 | 11 |
| | | C3 | | | | | | | | | | | |
| | | C4 | | | | | | | | | | | |
| | | C5 | | | | | | | | | | | |
| | Stabilizer (D) | D1 | 0.03 | 0.03 | 0.03 | 0.03 | 0.03 | 0.03 | 0.03 | 0.03 | 0.03 | 0.03 | 0.03 |
| | | D2 | 0.1 | 0.1 | 0.1 | 0.1 | 0.1 | 0.1 | 0.1 | 0.1 | 0.1 | 0.1 | 0.1 |
| | | D3 | 0.03 | 0.03 | 0.03 | 0.03 | 0.03 | 0.03 | 0.03 | 0.03 | 0.03 | 0.03 | 0.03 |
| | Release agent (E) | E1 | 0.2 | 0.2 | 0.2 | 0.2 | 0.2 | 0.2 | 0.2 | 0.2 | 0.2 | 0.2 | 0.2 |
| | | E2 | | | | | | | | | | | |
| Haze [%] | | Molding using common mold | 18 | 17 | 15 | 14 | 14 | 29 | 28 | 39 | 25 | 25 | 26 |
| | | Molding using heat-insulation mold | 6 | 6 | 4 | 4 | 4 | 15 | 21 | 26 | 12 | 13 | 13 |
| | | Heat-and-cool Molding | 7 | 6 | 4 | 3 | 4 | 16 | 20 | 28 | 13 | 13 | 13 |
| Ra [µm] | | Molding using common mold | 0.14 | 0.13 | 0.13 | 0.12 | 0.12 | 0.15 | 0.17 | 0.11 | 0.13 | 0.12 | 0.12 |
| | | Molding using heat-insulation mold | 0.02 | 0.03 | 0.03 | 0.02 | 0.03 | 0.02 | 0.04 | 0.02 | 0.02 | 0.02 | 0.03 |
| | | Heat-and-cool Molding | 0.03 | 0.02 | 0.03 | 0.03 | 0.03 | 0.03 | 0.04 | 0.03 | 0.03 | 0.03 | 0.02 |

| | | | | | | | | | | | | | |
|---|---|---|---|---|---|---|---|---|---|---|---|---|---|
| * Values in parentheses are viscosity-average molecular weights | | | | | | | | | | | | | |

**[Table 6]**

| | | | Example I-17 | Example 1-18 | Example 1-19 | Comparative example I-15 | Comparative example I-16 |
|---|---|---|---|---|---|---|---|
| | Polycarbonate resin (A) * | A1(20,400) | | | | | |
| | | A2(19,800) | 50 | | | | |
| | | A3(16,000) | | 50 | | | |
| | | A4(14,000) | | | 50 | | |
| | Polycarbonate resin (a) * | a1(24,200) | | | | | |
| | | a2(23,100) | | | | 50 | |
| | | a3(12,000) | | | | | 50 |
| | Polyester resin (B) | B1 | 50 | 50 | 50 | 50 | 50 |
| | Glass filler (C) | C1 | | | | | |
| Composition of thermoplastic resin composition (mass part) | | C2 | 43 | 43 | 43 | 43 | 43 |
| | | C3 | | | | | |
| | | C4 | | | | | |
| | | C5 | | | | | |
| | Stabilizer (D) | D1 | 0.04 | 0.04 | 0.04 | 0.04 | 0.04 |
| | | D2 | 0.14 | 0.14 | 0.14 | 0.14 | 0.13 |
| | | D3 | 0.04 | 0.04 | 0.04 | 0.04 | 0.04 |
| | Release agent (E) | E1 | 0.3 | 0.3 | 0.3 | 0.3 | 0.3 |
| | | E2 | | | | | |
| Haze [%] | | Molding using common mold | 51 | 50 | 50 | 65 | Difficult to draw strand |
| | | Molding using heat-insulation mold | 11 | 11 | 12 | 25 | |
| | | Heat-and-cool Molding | 12 | 11 | 11 | 26 | |
| Ra [µm] | | Molding using common mold | 0.32 | 0.31 | 0.29 | 0.35 | |
| | | Molding using heat-insulation mold | 0.04 | 0.04 | 0.04 | 0.05 | |
| | | Heat-and-cool Molding | 0.05 | 0.04 | 0.04 | 0.05 | |

| | | | | | | | |
|---|---|---|---|---|---|---|---|
| * Values in parentheses are viscosity-average molecular weights | | | | | | | |

**[Table 7]**

| | | | Example I-20 | Example I-21 | Example I-22 | Comparative example I-17 | Comparative example I-18 |
|---|---|---|---|---|---|---|---|
| | Polycarbonate resin (A) * | A1(20,400) | | | | | |
| | | A2(19,800) | | | | | |
| | | A3(16,000) | 50 | 50 | 50 | 50 | 100 |
| | | A4(14,000) | | | | | |
| | Polycarbonate resin (a) * | a1(24,200) | | | | | |
| | | a2(23, 100) | | | | | |
| | | a3(12,000) | | | | | |
| Composition of thermoplastic resin composition (mass part) | Polyester resin (B) | B1 | 50 | 50 | 50 | 50 | |
| | Glass filler (C) | C1 | | | | | |
| | | C2 | 25 | 25 | 25 | 67 | 25 |
| | | C3 | | | | | |
| | | C4 | | | | | |
| | | C5 | | | | | |
| | Stabilizer (D) | D1 | 0.04 | 0.04 | 0.04 | 0.05 | 0.04 |
| | | D2 | 0.13 | 0.13 | 0.13 | 0.17 | 0.13 |
| | | D3 | 0.04 | 0.04 | 0.04 | 0.05 | 0.04 |
| | Release agent (E) | E1 | | | 0.25 | | |
| | | E2 | | 0.13 | 0.13 | 0.17 | 0.13 |
| Haze [%] | | Molding using common mold | 29 | 27 | 26 | 82 | Clouded |
| | | Molding using heat-insulation mold | 7 | 7 | 6 | 19 | Clouded |
| | | Heat-and-cool Molding | 7 | 6 | 7 | 20 | Clouded |
| Ra [µm] | | Molding using common mold | 0.19 | 0.20 | 0.19 | 0.57 | 0.24 |
| | | Molding using heat-insulation mold | 0.03 | 0.03 | 0.03 | 0.06 | 0.04 |
| | | Heat-and-cool Molding | 0.03 | 0.03 | 0.03 | 0.05 | 0.05 |

| | | | | | | | |
|---|---|---|---|---|---|---|---|
| * Values in parentheses are viscosity-average molecular weights | | | | | | | |

The results described in Tables 2 to 7 confirm the following facts.

Whether the content of the polyester resin (B) did not fall within the range of the present invention and was excessively large as in Comparative examples I-4 and 11 or excessively small as in Comparative examples I-3 and 10, it was not possible to make the refractive index of the resin matrix approach the refractive index of the glass filler (C) and transparency was poor.

In Comparative examples I-1, 1-2, I-5 to I-7, I-9, I-12 to I-14, and I-15, where the viscosity-average molecular weight of the polycarbonate resin (a) used was above the range of the present invention, the haze values were high and transparency was poor compared with Examples that included the polycarbonate resin (A), the polyester resin (B), and the glass filler (C) at the same proportions as in the respective comparative examples. In contrast to the above comparative examples, in Examples, where the viscosity-average molecular weight of the polycarbonate resin (A) used fell within the range of the present invention, transparency was improved.

In Comparative examples I-8 and 16, where the viscosity-average molecular weight of the polycarbonate resin (a) used was below the range of the present invention, it was difficult to draw the strand and pellets were not formed.

The results obtained in any of the examples confirm that using the flattened cross-section glass fibers as a glass filler (C) improves transparency to a higher degree than using circular cross-section glass fibers.

The results obtained in any of the examples confirm that performing injection molding using the heat-insulation mold or by heat-and-cool molding markedly improves transparency compared with the case where injection molding is performed using a common mold.

The results obtained in Examples I-23 to I-26 confirm that suitable transparency may be achieved when glass flakes are used as a glass filler (C).

In Examples I-9 and I-10 and Example I-11, plural types of flattened cross-section glass fibers having different refractive indices as a result of having different compositions although having the same flattening factor were used. Compared with Examples I-9 and I-10, in Example I-11, the content of the polyester resin (B) was large and substantially the same haze value was measured. This confirms that it is important to adjust the mixing ratio between the polycarbonate resin (A) and the polyester resin (B) within the range of the present invention, in accordance with the refractive index of the glass filler (C) used.

Example I-20 is an example different from Example I-6 in that the release agent (E) was not used. Example I-21 is an example different from Example I-6 in that a release agent (E) different from that used in Example I-6 was used. Example I-22 is an example where two types of release agents (E) were used in combination. In any of the above examples, transparency was substantially the same.

In Comparative example I-17, where an excessively large amount of the glass filler (C) was used, transparency became significantly degraded.

In Comparative example I-18, where the polyester resin (B) was not used, the molded article became cloudy.

### {Examples and Comparative Examples of Sheet}

### {Examples II-1 to II-11 and Comparative Examples II-1 to II-7}

### <Production of Pellets of Thermoplastic Resin Composition>

Pellets of the thermoplastic resin composition were prepared as in Example I-1, except that the composition of the thermoplastic resin composition was changed to the proportions (mass part) described in Tables 8 and 9.

### <Preparation of Sheet>

The pellets prepared by the production method described above were dried at 100°C for 5 hours and subsequently formed into a sheet having a thickness of 1.0 mm with a single-screw extruder. The screw of the single-screw extruder used was a full-flight screw having a diameter of 30 mm and an L/D ratio of 38. The T-die used had a lip width of 300 mm. The resin ejected from the T-die was cooled by being pinched between two mirror-finished cooling rollers and then transported along one of the cooling rollers. The temperature of the cooling rollers was 120°C.

### <Measurement of Haze of Sheet>

The haze of the sheet prepared by the above method was measured with "SH7000" produced by Nippon Denshoku Industries Co., Ltd. The lower the haze value, the higher the transparency. The haze value of the sheet is preferably 70% or less.

Tables 8 and 9 describe the results of measurement of haze.

In Tables 8 and 9, Example and Comparative example Nos. of injection molded articles prepared using a thermoplastic resin composition having the same composition are also described as a remark.

Since Example II-11 is different from Example I-15 in that the release agent (E) was not used, there is no example in which an injection molded article having the same composition as in Example II-11 was prepared.

**[Table 8]**

| | | | Example II-1 | Example II-2 | Example II-3 | Example II-4 | Example II-5 | Example II-6 | Comparative example II-1 | Comparative example II-2 | Comparative example II-3 |
|---|---|---|---|---|---|---|---|---|---|---|---|
| Remark | | | Example I-1 | Example I-2 | Example I-5 | Example I-6 | Example I-9 | Example I-11 | Comparative example I-3 | Comparative example I-4 | Comparative example I-5 |
| | Polycarbonate resin (A) * | A1(20,400) | | | | | | | | | |
| | | A2(19,800) | 50 | | 50 | | | | | | |
| | | A3(16,000) | | 50 | | 50 | 56 | 30 | 73 | 15 | |
| | | A4(14,000) | | | | | | | | | |
| | Polycarbonate resin (a) * | a1(24,200) | | | | | | | | | 50 |
| Composition of thermoplastic resin composition (mass part) | | a2(23,100) | | | | | | | | | |
| | | a3(12,000) | | | | | | | | | |
| | Polyester resin (B) | B1 | 50 | 50 | 50 | 50 | 44 | 70 | 27 | 85 | 50 |
| | Glass filler (C) | C1 | 25 | 25 | | | | | | | |
| | | C2 | | | 25 | 25 | 25 | | 25 | 25 | 25 |
| | | C3 | | | | | | 25 | | | |
| | | C4 | | | | | | | | | |
| | | C5 | | | | | | | | | |
| | Stabilizer (D) | D1 | 0.04 | 0.04 | 0.04 | 0.04 | 0.04 | 0.04 | 0.04 | 0.04 | 0.04 |
| | | D2 | 0.13 | 0.13 | 0.13 | 0.13 | 0.13 | 0.13 | 0.13 | 0.13 | 0.13 |
| | | D3 | 0.04 | 0.04 | 0.04 | 0.04 | 0.04 | 0.04 | 0.04 | 0.04 | 0.04 |
| | Release agent (E) | E1 | 0.25 | 0.25 | 0.25 | 0.25 | 0.25 | 0.25 | 0.25 | 0.25 | 0.25 |
| | | E2 | | | | | | | | | |
| Haze [%] | | | 62 | 58 | 56 | 52 | 54 | 50 | 89 | 92 | 78 |

| | | | | | | | | | | | |
|---|---|---|---|---|---|---|---|---|---|---|---|
| * Values in parentheses are viscosity-average molecular weights | | | | | | | | | | | |

**[Table 9]**

| | | | Example 11-7 | Example 11-8 | Example II-9 | Example 11-10 | Example 11-11 | Comparative example II-4 | Comparative example 11-5 | Comparative example II-6 | Comparative example 11-7 |
|---|---|---|---|---|---|---|---|---|---|---|---|
| Remark | | | Example I-12 | Example I-13 | Example I-14 | Example I-15 | None | Comparative example I-9 | Comparative example I-12 | Comparative example I-10 | Comparative example I-11 |
| | Polycarbonate resin (A) * | A1(20,400) | | | | | | | | | |
| | | A2(19,800) | 50 | | 50 | | | | | | |
| | | A3(16,000) | | 50 | | 50 | 50 | | | 73 | 15 |
| | | A4(14,000) | | | | | | | | | |
| | Polycarbonate resin (a) * | a1(24,200) | | | | | | 50 | 50 | | |
| | | a2(23,100) | | | | | | | | | |
| | | a3(12,000) | | | | | | | | | |
| Composition of thermoplastic resin composition (mass part) | Polyester resin (B) | B1 | 50 | 50 | 50 | 50 | 50 | 50 | 50 | 27 | 85 |
| | Glass filler (C) | C1 | 11 | 11 | | | | 11 | | | |
| | | C2 | | | 11 | 11 | 11 | | 11 | 11 | 11 |
| | | C3 | | | | | | | | | |
| | | C4 | | | | | | | | | |
| | | C5 | | | | | | | | | |
| | Stabilizer (D) | D1 | 0.03 | 0.03 | 0.03 | 0.03 | 0.03 | 0.03 | 0.03 | 0.03 | 0.03 |
| | | D2 | 0.1 | 0.1 | 0.1 | 0.1 | 0.1 | 0.1 | 0.1 | 0.1 | 0.1 |
| | | D3 | 0.03 | 0.03 | 0.03 | 0.03 | 0.03 | 0.03 | 0.03 | 0.03 | 0.03 |
| | Release agent (E) | E1 | 0.2 | 0.2 | 0.2 | 0.2 | | 0.2 | 0.2 | 0.2 | 0.2 |
| | | E2 | | | | | | | | | |
| Haze [%] | | | 42 | 39 | 37 | 34 | 35 | 66 | 55 | 68 | 72 |

| | | | | | | | | | | | |
|---|---|---|---|---|---|---|---|---|---|---|---|
| * Values in parentheses are viscosity-average molecular weights | | | | | | | | | | | |

The results described in Tables 8 and 9 confirm that, even in the production of a sheet by a melt-extrusion method, using a thermoplastic resin composition having the composition according to the present invention may improve transparency as in the production of injection molded article, compared with the case where the type of the polycarbonate resin (A) used or the proportions of the polycarbonate resin (A), the polyester resin (B), and the glass filler (C) used are outside the range of the present invention.

## Claims

1. A thermoplastic resin composition comprising a thermoplastic resin component and a glass filler (C), the thermoplastic resin component including a polycarbonate resin (A) having a viscosity-average molecular weight of 13,000 to 22,000 and a polyester resin (B) including a terephthalic acid residue, a 1,4-cyclohexanedimethanol residue, and a 2,2,4,4-tetramethyl-1,3-cyclobutanediol residue,
wherein amounts of the polycarbonate resin (A) and the polyester resin (B) are 26 to 60 parts by mass and 74 to 40 parts by mass, respectively, relative to 100 parts by mass of a total amount of the polycarbonate resin (A) and the polyester resin (B), wherein an amount of the glass filler (C) is 10 to 45 parts by mass relative to 100 parts by mass of the thermoplastic resin component, and wherein the viscosity-average molecular weight is determined by conversion of solution viscosity measured at 25°C using methylene chloride as a solvent.

2. The thermoplastic resin composition according to Claim 1, wherein the glass filler (C) is one or both of glass fibers having a cross-sectional shape having a flattening factor of 1.5 to 8 and glass flakes having an average thickness of 0.1 to 10 µm, and wherein the flattening factor is expressed as a ratio of major axis length to minor axis length (D2/D1), where D2 and D1 are the lengths of major and minor axes, respectively, of a cross section of the fiber which is orthogonal to the longitudinal direction of the fiber.

3. A molded article produced by injection molding of the thermoplastic resin composition according to Claim 1 or **2.**

4. The molded article according to Claim **3,** wherein the molded article has a surface, and 30% or more of the entire surface of the molded article has a surface roughness Ra of **0.1** µm or less, wherein the roughness is determined according to the method outlined in the description.

5. A sheet comprising the thermoplastic resin composition according to Claim 1 or **2.**

6. The sheet according to Claim **5,** the sheet having a thickness of **0.2** to 2 mm.

7. A method for producing a molded article, the method comprising performing injection molding of the thermoplastic resin composition according to Claim 1 or 2 with a mold having a cavity wherein a ceramic layer is disposed on a surface of the cavity.

8. A method for producing a molded article, the method comprising performing injection molding of the thermoplastic resin composition according to Claim 1 or 2 with a mold having a cavity wherein a metal layer is disposed on a surface of the cavity, and a thermosetting resin layer is disposed on the metal layer.

9. A method for producing a molded article in which injection molding of the thermoplastic resin composition according to Claim 1 or 2 is performed, the method comprising conducting an injection step with a rapid heating-cooling mold when a temperature of a cavity surface of the mold is 130°C or more, and conducting a mold opening step when the temperature of the cavity surface of the mold is 80°C or less.

## Patentansprüche

1. Thermoplastische Harzzusammensetzung, die eine thermoplastische Harzkomponente und einen Glasfüllstoff (C) umfasst, wobei die thermoplastische Harzkomponente ein Polycarbonatharz (A) mit einem viskositätsmittleren Molekulargewicht von 13.000 bis 22.000 und ein Polyesterharz (B), das einen Terephthalsäurerest, einen 1,4-Cyclohexandimethanolrest und einen 2,2,4,4-Tetramethyl-1,3-cyclobutandiolrest enthält, umfasst,
wobei die Mengen des Polycarbonatharzes (A) und des Polyesterharzes (B) 26 bis 60 Masse-Teile bzw. 74 bis 40 Masse-Teile, die die Gesamtmenge des Polycarbonatharzes (A) und des Polyesterharzes (B) betreffen, ausmachen, wobei die Menge des Glasfüllstoffs (C) 10 bis 45 Masseteile, bezogen auf 100 Masseteile der thermoplastischen Harzkomponente, ausmacht, und wobei das viskositätsmittlere Molekulargewicht durch Umrechnung der bei 25°C gemessenen Lösungsviskosität unter Verwendung von Methylenchlorid als Lösungsmittel bestimmt wird.

2. Thermoplastische Harzzusammensetzung gemäß Anspruch 1, wobei der Glasfüllstoff (C) entweder Glasfasern mit einer Querschnittsform, die einen Abflachungsfaktor von 1,5 bis 8 aufweist, oder Glasflocken mit einer durchschnittlichen Dicke von 0,1 bis 10 mm oder beides ist, und wobei der Abflachungsfaktor als Verhältnis der Länge der Hauptachse zur Länge der Nebenachse ausgedrückt wird (D2/D1), worin D2 und D1 die Längen der Haupt- bzw. Nebenachse eines Querschnitts der Faser sind, der orthogonal zur Längsrichtung der Faser verläuft.

3. Formteil, das durch Spritzgießen der thermoplastischen Harzzusammensetzung gemäß Anspruch 1 oder 2 hergestellt ist.

4. Formteil gemäß Anspruch 3, wobei das Formteil eine Oberfläche aufweist und 30% oder mehr der gesamten Oberfläche des Formteils eine Oberflächenrauheit Ra von 0,1 mm oder weniger aufweisen, wobei die Rauheit gemäß dem in der Beschreibung dargelegten Verfahren bestimmt wird.

5. Folie, die die thermoplastische Harzzusammensetzung gemäß Anspruch 1 oder 2 umfasst.

6. Folie gemäß Anspruch 5, wobei die Folie eine Dicke von 0,2 bis 2 mm aufweist.

7. Verfahren zur Herstellung eines Formteils, wobei das Verfahren das Spritzgießen der thermoplastischen Harzzusammensetzung gemäß Anspruch 1 oder 2 umfasst mit einer Form, die einen Hohlraum aufweist, in dem eine Keramikschicht auf einer Oberfläche des Hohlraums angeordnet ist.

8. Verfahren zur Herstellung eines Formteils, wobei das Verfahren das Spritzgießen der thermoplastischen Harzzusammensetzung gemäß Anspruch 1 oder 2 umfasst mit einer Form, die einen Hohlraum aufweist, in dem auf einer Oberfläche des Hohlraums eine metallische Schicht angeordnet ist und auf der metallischen Schicht eine duroplastische Harzschicht angeordnet ist.

9. Verfahren zur Herstellung eines Formteils, in welchem das Spritzgießen der thermoplastischen Harzzusammensetzung gemäß Anspruch 1 oder 2 durchgeführt wird, wobei das Verfahren folgendes umfasst: Durchführen eines Einspritzschritts mit einer schnell aufheizbaren und abkühlbaren Form, wenn die Temperatur einer Hohlraumoberfläche der Form 130°C oder mehr beträgt, und Durchführen eines Formöffnungsschritts, wenn die Temperatur der Hohlraumoberfläche der Form 80°C oder weniger beträgt.

## Revendications

1. Composition de résine thermoplastique comprenant un composant de résine thermoplastique et une charge de verre (C), le composant de résine thermoplastique incluant une résine de polycarbonate (A) présentant une masse moléculaire moyenne en viscosité de 13 000 à 22 000 et une résine de polyester (B) incluant un résidu d'acide téréphtalique, un résidu de 1,4-cyclohexanediméthanol, et un résidu de 2,2,4,4-tétraméthyl-1,3-cyclobutanediol,
dans laquelle des quantités de la résine de polycarbonate (A) et de la résine de polyester (B) sont de 26 à 60 parties en masse et de 74 à 40 parties en masse, respectivement, par rapport à 100 parties en masse d'une quantité totale de la résine de polycarbonate (A) et de la résine de polyester (B), dans laquelle une quantité de la charge de verre (C) est de 10 à 45 parties en masse par rapport à 100 parties en masse du composant de résine thermoplastique, et dans laquelle la masse moléculaire moyenne en viscosité est déterminée par conversion d'une viscosité de solution mesurée à 25 °C en utilisant du chlorure de méthylène en tant que solvant.

2. Composition de résine thermoplastique selon la revendication 1, dans laquelle la charge de verre (C) est l'une ou les deux de fibres de verre présentant une forme de section transversale présentant un facteur d'aplatissement de 1,5 à 8 et des flocons de verre présentant une épaisseur moyenne de 0,1 à 10 µm, et dans laquelle le facteur d'aplatissement est exprimé en tant que rapport de longueur du grand axe à longueur du petit axe (D2/D1), où D2 et D1 sont les longueurs des grand et petit axes, respectivement, d'une section transversale de la fibre qui est orthogonale à la direction longitudinale de la fibre.

3. Article moulé produit par moulage par injection de la composition de résine thermoplastique selon la revendication 1 ou la revendication 2.

4. Article moulé selon la revendication 3, dans lequel l'article moulé présente une surface, et 30 % ou plus de la surface entière de l'article moulé présente une rugosité de surface Ra de 0,1 µm ou moins, dans lequel la rugosité est déterminée selon le procédé exposé dans la description.

5. Feuille comprenant la composition de résine thermoplastique selon la revendication 1 ou la revendication 2.

6. Feuille selon la revendication 5, la feuille présentant une épaisseur de 0,2 à 2 mm.

7. Procédé de production d'un article moulé, le procédé comprenant la réalisation d'un moulage par injection de la composition de résine thermoplastique selon la revendication 1 ou la revendication 2 avec un moule présentant une cavité, dans lequel une couche céramique est disposée sur une surface de la cavité.

8. Procédé de production d'un article moulé, le procédé comprenant la réalisation d'un moulage par injection de la composition de résine thermoplastique selon la revendication 1 ou la revendication 2 avec un moule présentant une cavité, dans lequel une couche de métal est disposée sur une surface de la cavité, et une couche de résine thermodurcissable est disposée sur la couche de métal.

9. Procédé de production d'un article moulé dans lequel un moulage par injection de la composition de résine thermoplastique selon la revendication 1 ou la revendication 2 est réalisé, le procédé comprenant l'exécution d'une étape d'injection avec un moule à chauffage-refroidissement rapide lorsqu'une température de la surface de cavité du moule est de 130 °C ou plus, et l'exécution d'une étape d'ouverture de moule lorsque la température de la surface de cavité du moule est de 80 °C ou moins.
